# EUROPEAN PATENT SPECIFICATION

(11) **EP 3 944 103 B1**
(45) Date of publication and mention of the grant of the patent: **09.09.2026**
(21) Application number: 19925190.1
(22) Date of filing: 16.04.2019
(51) Int. Cl.: G06F 21/54, G06F 21/52, G06F 17/00, H04L 9/40, G06F 21/57

(54) **METHOD FOR OPERATIONAL CHECK OF SOFTWARE PROGRAM, ELECTRONIC DEVICE AND STORAGE MEDIUM**
VERFAHREN ZUR BETRIEBSPRÜFUNG EINES SOFTWAREPROGRAMMS, ELEKTRONISCHES GERÄT UND SPEICHERMEDIUM
PROCÉDÉ POUR VÉRIFICATION OPÉRATIONNELLE DE PROGRAMME LOGICIEL, DISPOSITIF ÉLECTRONIQUE ET SUPPORT D'INFORMATIONS

(43) Date of publication of application: 26.01.2022
(73) Proprietor: Huawei Technologies Co., Ltd., Shenzhen, Guangdong 518129 (CN)
(72) Inventor: LUO, Huamin, Shenzhen, Guangdong 518129 (CN); MIN, Xin, Shenzhen, Guangdong 518129 (CN)
(74) Representative: Pfenning, Meinig & Partner mbB
(86) International application number: PCT/CN2019/082882
(87) International publication number: WO 2020/210983

(56) References cited:
- WO-A1-02/052424
- CN-A- 1 121 215
- CN-A- 101 149 773
- CN-A- 102 024 117
- CN-A- 102 314 578
- CN-A- 107 886 000
- US-A1- 2015 012 737
- US-A1- 2018 260 564

## Description

### TECHNICAL FIELD

This application relates to the field of computer technologies, and specifically, to a method for checking running of a software program, an electronic device, and a computer-readable storage medium.

### BACKGROUND

With continuous evolution of the internet and communication technologies, cyber security is becoming a focus of public attention, and security of subprocesses in a software program is an important part of the cyber security. A large number of attacks resulted from intentions to illegally run programs by tampering with or bypassing a check on normal subprocesses in the software programs.

In a conventional technology, a method for checking running of a software program is mainly based on a vector table. A basic idea of the method is to use a tool to pre-analyze and output a vector table including all possible running results in a process of running a software program, or statically generate the vector table including the possible running results of the program, and then check whether the program runs according to the preset vector table.

In the conventional technology, the following two problems exist in the check method based on a vector table: (1) Check error: The vector table generated by using the tool only represents all possible relationships, but does not reflect an exact relationship during actual running. In this case, only invalid jumps can be detected, but process requirements for actual program running cannot be accurately detected. For example, the following case cannot be checked: Because a critical function call is skipped, the program executes a wrong branch that is valid. (2) Check complexity: The vector table increases with program complexity to check all possible jump relationships.

Therefore, the foregoing problems in the conventional technology need to be resolved.
US 2018/0260564 A1 discloses a circuit for monitoring the security of a processor, wherein the circuit is configured to access a memory configured to store execution context data of a software program executed by the processor; to determine respective signatures and to compare said signatures with predefined signatures to monitor the security of the processor.
US2015/0012737 A1 discloses a method for securely booting a processor in a system, by computing a message authentication code from boot code, including an obfuscated algorithm for recreating the message in the processor, serving the boot code to the processor and executing the boot code to recreate the message.

### SUMMARY

The above mentioned problems are solved by the method for checking running of a software program, the electronic device, and the computer-readable storage medium, according to the claims. Embodiments of the present invention provide a method for checking running of a software program, to compare a second security authentication code generated in a process of running software with a pre-generated set of first security authentication codes to detect whether a software program runs correctly.

The invention is set out in the appended set of claims. A first aspect of this application provides a method for checking running of a software program. The software program includes at least one subprocess, each of the at least one subprocess corresponds to one secure operation, and the software program runs on a processor. The method includes: generating a set of first security authentication codes, where the set of first security authentication codes is a set randomly generated before the software program runs, the set of first security authentication codes includes at least one first security authentication code, and the at least one first security authentication code one-to-one corresponds to the subprocesses in the software program; processing an input security authentication code according to a first preset rule each time a subprocess runs, to obtain a second security authentication code, where the first preset rule may be a mathematical algorithm, each subprocess that has run in a process of running the software program corresponds to one input security authentication code and one second security authentication code; and when the subprocess runs correctly, the input security authentication code is equal to a first security authentication code corresponding to the subprocess; and when a relationship between the set of first security authentication codes and the second security authentication code meets a preset relationship, determining that the software program runs correctly.

In this embodiment, the set of first security authentication codes randomly generated before the software program runs is used to learn of all subprocesses that should be executed when the software program runs normally. In a process of actually running the software, the input security authentication code is processed according to the first preset rule each time the subprocess runs, to obtain the second security authentication code. The second security authentication code reflects an execution status of a subprocess in the software program. In this case, when the relationship between the set of first security authentication codes and the second security authentication code meets the preset relationship, it is determined that the software program runs correctly. In this way, a software program running status is monitored. Because the set of first security authentication codes is randomly generated each time before the software runs, security is further increased, and the set of first security authentication codes is prevented from being stolen and forged to evade a check process.

With reference to the first aspect, the checking an input security authentication code according to a first preset rule each time a subprocess runs, to obtain a second security authentication code, includes: when a first subprocess in the software program runs, obtaining an input security authentication code corresponding to the first subprocess, input security authentication codes corresponding to all subprocesses that have run before the first subprocess, and an initial authentication code, where the initial authentication code is an authentication code randomly generated before the software program runs; there is no correspondence between the initial authentication code and a subprocess in the software program; the first subprocess is a subprocess in the software program; and when the first subprocess runs correctly, the input security authentication code corresponding to the first subprocess is a first security authentication code corresponding to the first subprocess; and processing, according to the first preset rule, the initial authentication code, the input security authentication codes corresponding to all the subprocesses that have run before the first subprocess, and the input security authentication code corresponding to the first subprocess, to obtain a second security authentication code corresponding to the first subprocess.

In this embodiment, the second security authentication code corresponding to each subprocess that has run is obtained after the input security authentication code corresponding to the first subprocess, the input security authentication codes corresponding to all the subprocesses that have run before the first subprocess, and the initial authentication code are processed according to the first preset rule. Therefore, the second security authentication code reflects an association relationship between the subprocesses that have run. When a subprocess runs correctly, an input security authentication code corresponding to the subprocess is a first security authentication code corresponding to the subprocess. Therefore, the second security authentication code and the set of first security authentication codes meet the preset relationship only when each subprocess that has run correctly. In this way, whether each subprocess in the software program runs correctly can be determined by comparing a second security authentication code with a first security authentication code.

With reference to the first possible implementation of the first aspect, in a second possible implementation, when a relationship between the set of first security authentication codes and the second security authentication code meets a preset relationship, the determining that the software program runs correctly includes: processing, according to the first preset rule, the initial authentication code, the first security authentication code corresponding to the first subprocess, and first security authentication codes corresponding to all the subprocesses before the first subprocess, to obtain a first preset result value corresponding to the first subprocess, where each subprocess that needs to be monitored in the process of running the software program corresponds to one preset result value in a same processing manner, and the first preset result value may be stored in a hardware logic register; and when the first subprocess in the software program runs and the first preset result value is equal to the second security authentication code corresponding to the first subprocess, determining that the first subprocess runs correctly.

In this embodiment, the first subprocess is a subprocess in the software program. A preset result value corresponding to each subprocess is calculated; and when a subprocess in the software program runs, a second security authentication code corresponding to the subprocess is compared with a preset result value corresponding to the subprocess, to determine whether the subprocess runs correctly. In this way, running of a software process is detected in real time, and a running error can be determined in a timely manner when the error occurs in a specific subprocess. In addition, when a running error of a subprocess is detected, a method for checking a software program may not be subsequently performed, and a running error of the software program is directly determined.

With reference to the first possible implementation of the first aspect, in a third possible implementation, when a relationship between the set of first security authentication codes and the second security authentication code meets a preset relationship, the determining that the software program runs correctly includes: processing, according to the first preset rule, the initial authentication code and all first security authentication codes in the set of first security authentication codes, to obtain a first total preset result value, where the first total preset result value may be stored in the hardware logic register; and when running of the software program ends and the first total preset result value is equal to a second security authentication code corresponding to a last subprocess running in the software program, determining that the software program runs correctly.

In this embodiment, before the software program runs, the initial authentication code and all the first security authentication codes in the set of first security authentication codes are processed according to the first preset rule, to obtain the first total preset result value, and obtain the first total preset result value when the software program runs normally. Then, when running of the software program ends, the second security authentication code corresponding to the last subprocess running in the software program is compared with the first total preset result value. The second security authentication code corresponding to the last subprocess running in the software program is obtained by processing, according to the first preset rule, the initial authentication code and the input security authentication codes corresponding to all the subprocesses. Therefore, when the software program runs correctly, the input security authentication code is equal to the first security authentication code. In this case, the first total preset result value is equal to the second security authentication code corresponding to the last subprocess running in the software program. Whether all the subprocesses in the entire software program run correctly can be determined through only one comparison after running of the software program ends.

With reference to the first possible implementation of the first aspect, in a fourth possible implementation, if an output of the first preset rule is equal to an input of the first preset rule, where the first preset rule may be that the input is equal to the output, or the input and the output meet a specific relationship, the processing, according to the first preset rule, an input security authentication code corresponding to the subprocess, to obtain a second security authentication code includes: when the first subprocess in the software program runs, using the input security authentication code corresponding to the first subprocess as the second security authentication code corresponding to the first subprocess. When a relationship between the set of first security authentication codes and the second security authentication code meets a preset relationship, the determining that the software program runs correctly includes: processing all first security authentication codes in the set of first security authentication codes and the initial authentication code according to a second preset rule, to obtain a second total preset result value, where the second preset rule may be exclusive OR, addition, subtraction, multiplication, or division, and the second preset rule is stored in a software variable of the software program or the hardware logic register; after running of the software program ends, processing all second security authentication codes and the initial authentication code according to the second preset rule to obtain a total authentication result value; and when the second total preset result value is equal to the total authentication result value are equal, determining that the software program runs correctly.

In this embodiment, the first preset rule is an input-output rule, and the input security authentication code corresponding to the first subprocess is directly used as the second security authentication code corresponding to the first subprocess, to obtain a set of second security authentication codes when running of the software program ends. Then, the set of second security authentication codes is processed according to the second preset rule to obtain the total authentication result value. Before the software program runs, the set of first security authentication codes is processed according to the same second preset rule to obtain the second total preset result value. Therefore, it can be determined that the software program runs normally, provided that the second total preset result value is equal to the total authentication result value are equal.

With reference to the first aspect and the first to the fourth possible implementations of the first aspect, in a fifth possible implementation, the method further includes: determining, by using a hardware logic circuit, whether a relationship between the set of first security authentication codes and the second security authentication code meets the preset relationship. The hardware logic circuit may be a hardware circuit that can read code to execute a program, a processor core with a register, or a chip such as an SoC or a processor. When a relationship between the set of first security authentication codes and the second security authentication code meets a preset relationship, the determining that the software program runs correctly specifically includes: when the relationship between the set of first security authentication codes and the second security authentication code meets the preset relationship, determining, by using the hardware logic circuit, that the software program runs correctly. The hardware logic circuit is independent of the processor.

In this embodiment, the hardware logic circuit compares the set of first security authentication codes with the second security authentication code, so that work of the hardware logic circuit is not bypassed even if a subprocess in the software program is tampered with or bypassed. Therefore, all preset result values corresponding to the first preset rule and all preset result values corresponding to the second preset rule are stored in a hardware logic register, so that there is a higher confidentiality level for the comparison between the set of first security authentication codes and the second security authentication code. This further improves security.

With reference to the first aspect and the first to the third possible implementations of the first aspect, in a sixth possible implementation, the first preset rule is stored in a software variable of the software program or a hardware logic register. The first preset rule is exclusive OR, addition, subtraction, multiplication, or division.

In this embodiment, the first preset rule is stored in the software variable of the software program, so that the processor running may obtain the first preset rule for calculation. Further, if the first preset rule is stored in the hardware logic register, the first preset rule can have a higher confidentiality level. The hardware logic register cannot be bypassed even if the software program is tampered with. This improves security.

With reference to the first aspect and the first to the sixth possible implementations of the first aspect, in a seventh possible implementation, the first security authentication code, the second security authentication code, and the initial authentication code include a symbol or a random number.

In this embodiment of this application, because the first security authentication code in the set of first security authentication codes is randomly generated before the software program runs, the first security authentication code may be a randomly generated symbol or a random number, to facilitate calculation according to the first preset rule or the second preset rule.

With reference to the first aspect and the first to the seventh possible implementations of the first aspect, in an eighth possible implementation, the at least one subprocess is a subprocess that is repeatedly used in the software program, or the at least one subprocess is a subprocess including some deterministic steps in a software program whose running program is nondeterministic.

In this embodiment, the subprocesses monitored by using the method for checking running of the software program are not all subprocesses in the software program, but some subprocesses running in the program. The subprocesses monitored by using the method for checking running of the software program may be some subprocesses that affect software program running security, or may be subprocesses that are repeatedly used in the software program or subprocesses including some deterministic steps in a software program whose running program is nondeterministic. In this way, computing power is reduced, not all subprocesses need to be monitored, and correct running of a correct software program is ensured by monitoring some subprocesses.

With reference to the first aspect and the first to the eighth possible implementations of the first aspect, in a ninth possible implementation, the software program includes secure boot or protocol authentication. The at least one subprocess includes boot initialization, flash data reading, key (key) and parameter authentication, system initialization, code authentication, and a boot finishing process.

In this embodiment, secure boot or protocol authentication is a typical scenario that has a requirement on running security of the software program. Subprocesses that affect running security of secure boot or protocol authentication include the boot initialization process, the flash data reading process, the key and parameter authentication process, the system initialization process, the code authentication process, and the boot finishing process. In this way, whether entire secure boot or protocol authentication runs correctly can be monitored by determining the foregoing subprocesses.

A second aspect of this application provides an apparatus for checking running of a software program. The software program checked by the apparatus for checking running of the software program includes at least one subprocess, each of the at least one subprocess corresponds to one secure operation, and the software program runs on a processor. The apparatus includes a generation unit, an obtaining unit, and a determining unit. The generation unit is configured to generate a set of first security authentication codes. The set of first security authentication codes is a set randomly generated before the software program runs, the set of first security authentication codes includes at least one first security authentication code, and the at least one first security authentication code one-to-one corresponds to the subprocesses in the software program. The obtaining unit is configured to process an input security authentication code according to a first preset rule each time a subprocess runs, to obtain a second security authentication code. Each subprocess that has run in a process of running the software program corresponds to one input security authentication code and one second security authentication code. When the subprocess runs correctly, the input security authentication code is equal to a first security authentication code that corresponds to the subprocess and that is generated by the generation unit. The determining unit is configured to: when a relationship between the set of first security authentication codes generated by the generation unit and the second security authentication code obtained by the obtaining unit meets a preset relationship, determine that the software program runs correctly.

In this embodiment, the set of first security authentication codes randomly generated by the generation unit before the software program runs is used to learn of all subprocesses that should be executed when the software program runs normally. In a process of actually running the software, the obtaining unit processes the input security authentication code according to the first preset rule each time the subprocess runs, to obtain the second security authentication code. The second security authentication code reflects an execution status of a subprocess in the software program. In this case, when the relationship between the set of first security authentication codes and the second security authentication code meets the preset relationship, the determining unit determines that the software program runs correctly. In this way, a software program running status is monitored. Because the set of first security authentication codes is randomly generated each time before the software runs, security is further increased, and the set of first security authentication codes is prevented from being stolen and forged to evade a check process.

With reference to the second aspect, the obtaining unit is further configured to: when a first subprocess in the software program runs, obtain an input security authentication code corresponding to the first subprocess, input security authentication codes corresponding to all subprocesses that have run before the first subprocess, and an initial authentication code, where there is no correspondence between the initial authentication code and a subprocess in the software program; the first subprocess is a subprocess in the software program; and when the first subprocess runs correctly, the input security authentication code corresponding to the first subprocess is a first security authentication code corresponding to the first subprocess; and process, according to the first preset rule, the initial authentication code, the input security authentication codes corresponding to all the subprocesses that have run before the first subprocess, and the input authentication code corresponding to the first subprocess, to obtain a second security authentication code corresponding to the first subprocess.

In this embodiment, the second security authentication code corresponding to each subprocess that has run is obtained after the obtaining unit processes, according to the first preset rule, the input security authentication code corresponding to the first subprocess, the input security authentication codes corresponding to all the subprocesses that have run before the first subprocess, and the initial authentication code. Therefore, the second security authentication code reflects an association relationship between the subprocesses that have run. When a subprocess runs correctly, an input security authentication code corresponding to the subprocess is a first security authentication code corresponding to the process. Therefore, the second security authentication code and the set of first security authentication codes meet the preset relationship only when each subprocess that has run correctly. In this way, whether each subprocess in the software program runs correctly can be determined by comparing a second security authentication code with a first security authentication code.

With reference to the first possible implementation of the second aspect, in a second possible implementation, the determining unit is further configured to: process, according to the first preset rule, the initial authentication code, the first security authentication code corresponding to the first subprocess, and first security authentication codes corresponding to all subprocesses before the first subprocess, to obtain a first preset result value corresponding to the first subprocess; and when the first subprocess in the software program runs and the first preset result value is equal to the second security authentication code corresponding to the first subprocess, determine that the first subprocess runs correctly.

In this embodiment, the first subprocess is a subprocess in the software program. The determining unit calculates a preset result value corresponding to each subprocess, and compares, when a subprocess in the software program runs, a second security authentication code corresponding to the subprocess with a preset result value corresponding to the subprocess, to determine whether the subprocess runs correctly. In this way, running of a software process is detected in real time, and a running error can be determined in a timely manner when the error occurs in a specific subprocess. In addition, when a running error of a subprocess is detected, a method for checking a software program may not be subsequently performed, and a running error of the software program is directly determined.

With reference to the first possible implementation of the second aspect, in a third possible implementation, the determining unit is further configured to: process, according to the first preset rule, the initial authentication code and all first security authentication codes in the set of first security authentication codes, to obtain a first total preset result value; and when running of the software program ends and the first total preset result value is equal to a second security authentication code corresponding to a last subprocess running in the software program, determine that the software program runs correctly.

In this embodiment, before the software program runs, the determining unit processes the initial authentication code and all the first security authentication codes in the set of first security authentication codes according to the first preset rule, to obtain the first total preset result value, and obtain the first total preset result value when the software program runs normally. Then, when running of the software program ends, the determining unit compares the second security authentication code corresponding to the last subprocess running in the software program with the first total preset result value. The second security authentication code corresponding to the last subprocess running in the software program is obtained by processing, according to the first preset rule, the initial authentication code and the input security authentication codes corresponding to all the subprocesses. Therefore, when the software program runs correctly, the input security authentication code is equal to the first security authentication code. In this case, the first total preset result value is equal to the second security authentication code corresponding to the last subprocess running in the software program. Whether all the subprocesses in the entire software program run correctly can be determined through only one comparison after running of the software program ends.

With reference to the first possible implementation of the second aspect, in a fourth possible implementation, the obtaining unit is further configured to: when the first subprocess in the software program runs, use the input security authentication code corresponding to the first subprocess as the second security authentication code corresponding to the first subprocess. The determining unit is further configured to: process all first security authentication codes in the set of first security authentication codes and the initial authentication code according to a second preset rule, to obtain a second total preset result value; after running of the software program ends, process all second security authentication codes and the initial authentication code according to the second preset rule to obtain a total authentication result value; and when the second total preset result value is equal to the total authentication result value are equal, determine that the software program runs correctly.

In this embodiment, the first preset rule is an input-output rule, and the input security authentication code corresponding to the first subprocess is directly used as the second security authentication code corresponding to the first subprocess, to obtain a set of second security authentication codes when running of the software program ends. Then, the set of second security authentication codes is processed according to the second preset rule to obtain the total authentication result value. Before the software program runs, the set of first security authentication codes is processed according to the same second preset rule to obtain the second total preset result value. Therefore, it can be determined that the software program runs normally, provided that the second total preset result value is equal to the total authentication result value.

With reference to the second aspect and the first to the fourth possible implementations of the second aspect, in a fifth possible implementation, the determining unit is further configured to: determine, by using a hardware logic circuit, whether a relationship between the set of first security authentication codes and the second security authentication code meets the preset relationship; and when the relationship between the set of first security authentication codes and the second security authentication code meets the preset relationship, determine, by using the hardware logic circuit, that the software program runs correctly. The hardware logic circuit is independent of the processor.

In this embodiment, the hardware logic circuit compares the set of first security authentication codes with the second security authentication code, so that work of the hardware logic circuit is not bypassed even if a subprocess in the software program is tampered with or bypassed. Therefore, all preset result values corresponding to the first preset rule and all preset result values corresponding to the second preset rule are stored in a hardware logic register, so that there is a higher confidentiality level for the comparison between the set of first security authentication codes and the second security authentication code. This further improves security.

With reference to the second aspect and the first to the third possible implementations of the second aspect, in a sixth possible implementation, the first preset rule is stored in a software variable of the software program or a hardware logic register. The first preset rule is exclusive OR, addition, subtraction, multiplication, or division.

In this embodiment, the first preset rule is stored in the software variable of the software program, so that the processor running may obtain the first preset rule for calculation. Further, if the first preset rule is stored in the hardware logic register, the first preset rule can have a higher confidentiality level. The hardware logic register cannot be bypassed even if the software program is tampered with. This improves security.

With reference to the second aspect and the first to the sixth possible implementations of the second aspect, in a seventh possible implementation, the first security authentication code, the second security authentication code, and the initial authentication code include a symbol or a random number.

In this embodiment of this application, because the first security authentication code in the set of first security authentication codes is randomly generated before the software program runs, the first security authentication code may be a randomly generated symbol or a random number, to facilitate calculation according to the first preset rule or the second preset rule.

With reference to the second aspect and the first to the seventh possible implementations of the second aspect, in an eighth possible implementation, the at least one subprocess is a subprocess that is repeatedly used in the software program, or the at least one subprocess is a subprocess including some deterministic steps in a software program whose running program is nondeterministic.

With reference to the second aspect and the first to the eighth possible implementations of the second aspect, in a ninth possible implementation, the software program includes secure boot or protocol authentication. The at least one subprocess includes boot initialization, flash data reading, key and parameter authentication, system initialization, code authentication, and a boot finishing process.

In this embodiment, secure boot or protocol authentication is a typical scenario that has a requirement on running security of the software program. Subprocesses that affect running security of secure boot or protocol authentication include the boot initialization process, the flash data reading process, the key and parameter authentication process, the system initialization process, the code authentication process, and the boot finishing process. In this way, whether entire secure boot or protocol authentication runs correctly can be monitored by determining the foregoing subprocesses.

A third aspect of this application provides an electronic device. The electronic device includes a transmission interface and a processor. The processor is configured to: generate a set of first security authentication codes, where the set of first security authentication codes is a set randomly generated before the software program runs, the set of first security authentication codes includes at least one first security authentication code, and the at least one first security authentication code one-to-one corresponds to at least one subprocess in the software program; process an input security authentication code according to a first preset rule each time a subprocess runs, to obtain a second security authentication code, where the first preset rule may be a mathematical algorithm, each subprocess that has run in a process of running the software program corresponds to one input security authentication code and one second security authentication code; and when the subprocess runs correctly, the input security authentication code is equal to a first security authentication code corresponding to the subprocess; and when a relationship between the set of first security authentication codes generated by the processor and the second security authentication code meets a preset relationship, determine that the software program runs correctly.

In this embodiment, the set of first security authentication codes randomly generated before the software program runs is used to learn of all subprocesses that should be executed when the software program runs normally. In a process of actually running the software, the input security authentication code is processed according to the first preset rule each time the subprocess runs, to obtain the second security authentication code. The second security authentication code reflects an execution status of a subprocess in the software program. In this case, when the relationship between the set of first security authentication codes and the second security authentication code meets the preset relationship, it is determined that the software program runs correctly. In this way, a software program running status is monitored. Because the set of first security authentication codes is randomly generated each time before the software runs, security is further increased, and the set of first security authentication codes is prevented from being stolen and forged to evade a check process.

With reference to the third aspect, in a first possible implementation, the processor is further configured to: when a first subprocess in the software program runs, obtain an input security authentication code corresponding to the first subprocess, input security authentication codes corresponding to all subprocesses that have run before the first subprocess, and an initial authentication code, where the initial authentication code is an authentication code randomly generated before the software program runs, there is no correspondence between the initial authentication code and a subprocess in the software program; the first subprocess is a subprocess in the software program; and when the first subprocess runs correctly, the input security authentication code corresponding to the first subprocess is a first security authentication code corresponding to the first subprocess; and process, according to the first preset rule, the initial authentication code, the input security authentication codes corresponding to all the subprocesses that have run before the first subprocess, and the input authentication code corresponding to the first subprocess, to obtain a second security authentication code corresponding to the first subprocess.

In this embodiment, the second security authentication code corresponding to each subprocess that has run is obtained after the input security authentication code corresponding to the first subprocess, the input security authentication codes corresponding to all the subprocesses that have run before the first subprocess, and the initial authentication code are processed according to the first preset rule. Therefore, the second security authentication code reflects an association relationship between the subprocesses that have run. When a subprocess runs correctly, an input security authentication code corresponding to the subprocess is a first security authentication code corresponding to the process. Therefore, the second security authentication code and the set of first security authentication codes meet the preset relationship only when each subprocess that has run correctly. In this way, whether each subprocess in the software program runs correctly can be determined by comparing a second security authentication code with a first security authentication code.

With reference to the first possible implementation of the third aspect, in a second possible implementation, the processor is further configured to: process, according to the first preset rule, the initial authentication code, the first security authentication code corresponding to the first subprocess, and first security authentication codes corresponding to all the subprocesses before the first subprocess, to obtain a first preset result value corresponding to the first subprocess, where each subprocess that needs to be monitored in the process of running the software program corresponds to one preset result value in a same processing manner, and the first preset result value may be stored in a hardware logic register; and when the first subprocess in the software program runs and the first preset result value is equal to the second security authentication code corresponding to the first subprocess, determine that the first subprocess runs correctly.

In this embodiment, the first subprocess is a subprocess in the software program. A preset result value corresponding to each subprocess is calculated; and when a subprocess in the software program runs, a second security authentication code corresponding to the subprocess is compared with a preset result value corresponding to the subprocess, to determine whether the subprocess runs correctly. In this way, running of a software process is detected in real time, and a running error can be determined in a timely manner when the error occurs in a specific subprocess. In addition, when a running error of a subprocess is detected, a method for checking a software program may not be subsequently performed, and a running error of the software program is directly determined.

With reference to the first possible implementation of the third aspect, in a third possible implementation, the processor is further configured to: process, according to the first preset rule, the initial authentication code and all first security authentication codes in the set of first security authentication codes, to obtain a first total preset result value, where the first total preset result value may be stored in the hardware logic register; and when running of the software program ends and the first total preset result value is equal to a second security authentication code corresponding to a last subprocess running in the software program, determine that the software program runs correctly.

In this embodiment, before the software program runs, the initial authentication code and all the first security authentication codes in the set of first security authentication codes are processed according to the first preset rule, to obtain the first total preset result value, and obtain the first total preset result value when the software program runs normally. Then, when running of the software program ends, the second security authentication code corresponding to the last subprocess running in the software program is compared with the first total preset result value. The second security authentication code corresponding to the last subprocess running in the software program is obtained by processing, according to the first preset rule, the initial authentication code and the input security authentication codes corresponding to all the subprocesses. Therefore, when the software program runs correctly, the input security authentication code is equal to the first security authentication code. In this case, the first total preset result value is equal to the second security authentication code corresponding to the last subprocess running in the software program. Whether all the subprocesses in the entire software program run correctly can be determined through only one comparison after running of the software program ends.

With reference to the first possible implementation of the third aspect, in a fourth possible implementation, if an output of the first preset rule prestored by the processor is equal to an input of the first preset rule, the processor is further configured to: when the first subprocess in the software program runs, use the input security authentication code corresponding to the first subprocess as the second security authentication code corresponding to the first subprocess; process all first security authentication codes in the set of first security authentication codes and the initial authentication code according to a second preset rule, to obtain a second total preset result value, where the second preset rule may be exclusive OR, addition, subtraction, multiplication, or division, and the second preset rule is stored in a software variable of the software program or the hardware logic register; after running of the software program ends, process all second security authentication codes and the initial authentication code according to the second preset rule to obtain a total authentication result value; and when the second total preset result value is equal to the total authentication result value, determine that the software program runs correctly.

In this embodiment, the first preset rule is an input-output rule, and the input security authentication code corresponding to the first subprocess is directly used as the second security authentication code corresponding to the first subprocess, to obtain a set of second security authentication codes when running of the software program ends. Then, the set of second security authentication codes is processed according to the second preset rule to obtain the total authentication result value. Before the software program runs, the set of first security authentication codes is processed according to the same second preset rule to obtain the second total preset result value. Therefore, it can be determined that the software program runs normally, provided that the second total preset result value is equal to the total authentication result value.

With reference to the third aspect and the first to the fourth possible implementations of the third aspect, in a fifth possible implementation, the electronic device further includes a hardware logic circuit. The hardware logic circuit is independent of the processor. The hardware logic circuit is configured to determine whether a relationship between the set of first security authentication codes and the second security authentication code meets the preset relationship. The hardware logic circuit may be a hardware circuit that can read code to execute a program, a processor core with a register, or a chip such as an SoC or a processor. When the relationship between the set of first security authentication codes and the second security authentication code meets the preset relationship, the hardware logic circuit determines that the software program runs correctly.

In this embodiment, the hardware logic circuit compares the set of first security authentication codes with the second security authentication code, so that work of the hardware logic circuit is not bypassed even if a subprocess in the software program is tampered with or bypassed. Therefore, all preset result values corresponding to the first preset rule and all preset result values corresponding to the second preset rule are store, so that there is a higher confidentiality level for the comparison between the set of first security authentication codes and the second security authentication code. This further improves security.

With reference to the third aspect and the first to the third possible implementations of the third aspect, in a sixth possible implementation, the first preset rule is stored in a software variable of the software program or a hardware logic register. The first preset rule is exclusive OR, addition, subtraction, multiplication, or division.

In this embodiment, the first preset rule is stored in the software variable of the software program, so that the processor running may obtain the first preset rule for calculation. Further, if the first preset rule is stored in the hardware logic register, the first preset rule can have a higher confidentiality level. The hardware logic register cannot be bypassed even if the software program is tampered with. This improves security.

With reference to the third aspect and the first to the sixth possible implementations of the third aspect, in a seventh possible implementation, the first security authentication code, the second security authentication code, and the initial authentication code include a symbol or a random number.

In this embodiment of this application, because the first security authentication code in the set of first security authentication codes is randomly generated before the software program runs, the first security authentication code may be a randomly generated symbol or a random number, to facilitate calculation according to the first preset rule or the second preset rule.

With reference to the third aspect and the first to the seventh possible implementations of the third aspect, in an eighth possible implementation, the at least one subprocess is a subprocess that is repeatedly used in the software program, or the at least one subprocess is a subprocess including some deterministic steps in a software program whose running program is nondeterministic.

In this embodiment, the subprocesses monitored by using the method for checking running of the software program are not all subprocesses in the software program, but some subprocesses running in the program. The subprocesses monitored by using the method for checking running of the software program may be some subprocesses that affect software program running security, or may be subprocesses that are repeatedly used in the software program or subprocesses including some deterministic steps in a software program whose running program is nondeterministic. In this way, computing power is reduced, not all subprocesses need to be monitored, and correct running of a correct software program is ensured by monitoring some subprocesses.

With reference to the third aspect and the first to the eighth possible implementations of the third aspect, in a ninth possible implementation, the software program includes secure boot or protocol authentication. The at least one subprocess includes boot initialization, flash data reading, key and parameter authentication, system initialization, code authentication, and a boot finishing process.

In this embodiment, secure boot or protocol authentication is a typical scenario that has a requirement on running security of the software program. Subprocesses that affect running security of secure boot or protocol authentication include the boot initialization process, the flash data reading process, the key and parameter authentication process, the system initialization process, the code authentication process, and the boot finishing process. In this way, whether entire secure boot or protocol authentication runs correctly can be monitored by determining the foregoing subprocesses.

A fourth aspect of this application provides a computer-readable storage medium, including instructions. When the instructions are run on a computer device or a processor, the computer device or the processor is enabled to perform the method described in any one of the first aspect or the possible implementations of the first aspect.

A fifth aspect of this application provides a computer program product including instructions. When the computer program product runs on a computer or a processor, the computer or the processor is enabled to perform the method described in any one of the first aspect or the possible implementations of the first aspect.

According to the foregoing technical solutions, it can be learned that the embodiments of this application have the following advantages:

The embodiments of the present invention provide the method for checking running of the software program, the electronic device, and the storage medium. The software program includes at least one subprocess, each of the at least one subprocess corresponds to one secure operation, and the software program runs on the processor. The method includes: generating the set of first security authentication codes, where the set of first security authentication codes is a set randomly generated before the software program runs, the set of first security authentication codes includes at least one first security authentication code, and the at least one first security authentication code one-to-one corresponds to the subprocesses in the software program; processing, according to the first preset rule each time the subprocess runs, the input security authentication code corresponding to the subprocess, to obtain the second security authentication code, where when the subprocess runs correctly, the input security authentication code is equal to a first security authentication code corresponding to the subprocess; and when a relationship between the set of first security authentication codes and the second security authentication code meets the preset relationship, determining that the software program runs correctly. The set of first security authentication codes is generated before the software program runs. In the process of running the software program, the input security authentication code corresponding to the subprocess is processed according to the first preset rule each time the subprocess runs, to obtain the second security authentication code. When the subprocess runs correctly, the input security authentication code is equal to the first security authentication code corresponding to the subprocess. Therefore, if the relationship between the set of first security authentication codes and the second security authentication code meets the preset relationship, it may be determined that the software program runs correctly; or if the set of first security authentication codes and the second security authentication code do not meet the preset relationship, it may be determined that the software program runs abnormally. The foregoing method can accurately check whether all the subprocesses in the software program run correctly, and greatly reduce complexity of the check method. The method can be implemented only by adding the set of first security authentication codes and performing calculation according to the first preset rule, requiring a small code amount. In addition, as complexity of the program increases, complexity of the check method remains almost unchanged.

### BRIEF DESCRIPTION OF DRAWINGS

FIG. 1a is a schematic diagram of an embodiment of a method for checking running of a software program according to an embodiment of the present invention;
FIG. 1b is a schematic diagram of another embodiment of a method for checking running of a software program according to an embodiment of the present invention;
FIG. 2 is a schematic diagram of another embodiment of a method for checking running of a software program according to an embodiment of the present invention;
FIG. 3 is a schematic diagram of another embodiment of a method for checking running of a software program according to an embodiment of the present invention;
FIG. 4 is a schematic diagram of another embodiment of a method for checking running of a software program according to an embodiment of the present invention;
FIG. 5 is a schematic diagram of another embodiment of a method for checking running of a software program according to an embodiment of the present invention;
FIG. 6 is a schematic diagram of an embodiment of an apparatus for checking running of a software program according to an embodiment of the present invention; and
FIG. 7 is a schematic diagram of an embodiment of an electronic device according to an embodiment of the present invention.

### DESCRIPTION OF EMBODIMENTS

Embodiments of the present invention provide a method for checking running of a software program, an electronic device, and a storage medium, to compare a second security authentication code generated in a process of running software with a pre-generated set of first security authentication codes to detect whether a software program runs correctly.

To make a person skilled in the art understand technical solutions in this application better, the following clearly and completely describes the technical solutions in the embodiments of this application with reference to the accompanying drawings in the embodiments of this application. It is clear that the described embodiments are merely some rather than all of the embodiments of this application. All other embodiments obtained by a person of ordinary skill in the art based on the embodiments of this application without creative efforts shall fall within the protection scope of this application.

In the specification, claims, and accompanying drawings of this application, terms "first", "second", "third", "fourth", and the like (if used) are intended to distinguish between similar objects but do not necessarily indicate a specific order or sequence. It should be understood that data used in such a way are interchangeable in proper circumstances so that the embodiments described herein can be implemented in an order other than orders illustrated or described herein. Moreover, terms "include", "comprise", and any other variants mean to cover non-exclusive inclusion, for example, a process, method, system, product, or device that includes a list of steps or units is not necessarily limited to those steps or units, but may include other steps or units not expressly listed or inherent to such a process, method, product, or device.

It should be understood that, in this application, "at least one" means one or more, and "a plurality of" means two or more. The term "and/or" is used to describe an association relationship between associated objects, and indicates that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural.

With continuous evolution of the internet and communication technologies, cyber security is becoming a focus of public attention, and security of subprocesses in software is an important part of the cyber security. A large number of attacks resulted from intentions to illegally run programs by tampering with or bypassing a check on normal subprocesses in software.

At present, a common method for checking a software program is mainly based on a vector table. A basic idea is to first use a tool to analyze and output a vector table including possible running results, or statically generate a vector table including possible running results of the program, and then check whether the program runs according to a preset vector table. A vector table size is adjusted based on a precision requirement.

A common method is to generate a program running vector table, and then check the program in real time when the program is running. Basic principles of the common method mainly include the following steps:
(1) Use a tool to statically analyze a software program, and extract, from the program, a possible relationship between calling of each function and a jump during running, to store the relationships as a vector table.
(2) When the program runs, monitor a stack of the program to obtain, from the program, an actual relationship between function calling and a jump during running; and compare the relationship with the vector table stored in step (1), to learn whether the relationships are valid. This achieves an objective of checking program running.

The foregoing technical solution mainly has the following two disadvantages in two aspects:
(1) Check error: The vector table generated by using the tool only represents all possible relationships, but does not reflect an exact relationship during actual running. In this case, only invalid jumps can be detected, but process requirements for actual program running cannot be accurately detected. For example, the following case cannot be checked: Because a critical function call is skipped, the program executes a wrong branch that is valid.
(2) Check costs: The vector table increases with program complexity to check all possible jump relationships, resulting in an increase in costs of vector tables.

To overcome the foregoing disadvantages, the embodiments of this application provide a method for checking running of a software program. A second security authentication code generated in a process of running software is compared with a pre-generated set of first security authentication codes, to check whether each software program that is expected to be checked runs in an expected manner, whether subprocesses or functions are not illegally bypassed, and whether a process is not illegally tampered with, thereby monitoring whether the software program runs correctly. In addition, complexity of the method for checking running of the software program provided in the embodiments of this application does not increase with software complexity. The method provided in the embodiments of this application may be applied to embedded software, for example, an application (app) in an intelligent terminal (a mobile phone or a tablet computer) or embedded software disposed in a television set-top box. A check is performed by using the method for checking running of the software program in this application, to ensure that a subprocess in a software program is not tampered with or bypassed in a process of running the app or a program in the television set-top box, and ensure that the software program runs correctly. Further, the method for checking running of the software program provided in the embodiments of this application may be a boot program. Optionally, when a running environment of the method for checking running of the software program provided in the embodiments of this application is a personal computer (PC), the method for checking running of the software program may alternatively be a basic input/output system (BIOS) program. For ease of understanding specific implementations of the method for checking running of the software program provided in the embodiments of this application, the following describes the technical solutions of this application in detail with reference to the accompanying drawings.

The software program described in the embodiments of this application is applied to a scenario with a security requirement. The software program includes at least one subprocess, each of the at least one subprocess corresponds to one secure operation, and the software program runs on a processor.

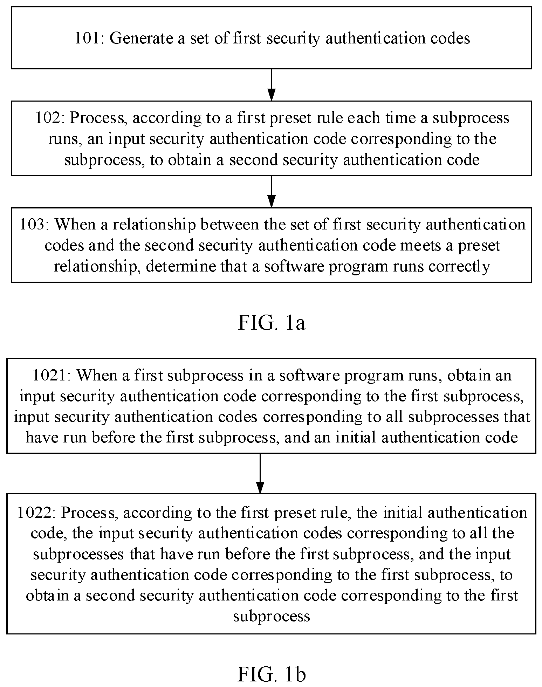

As shown in FIG. 1a, a method for checking running of a software program provided in an embodiment of this application includes the following steps.

101: Generate a set of first security authentication codes.

In this embodiment, the set of first security authentication codes is a set pre-generated before a software program runs, the set of first security authentication codes includes at least one first security authentication code, and one first security authentication code corresponds to one subprocess in the software program. Optionally, a manner of generating the set of first security authentication codes may include the following two steps: (1) Obtain a target subprocess running in the software program, where the target subprocess is a subprocess in a process of running the software program; (2) Generate a target security authentication code corresponding to the target subprocess as a first security authentication code corresponding to the target subprocess, where when the software program includes a plurality of subprocesses, the plurality of first security authentication codes corresponding to the plurality of subprocesses form the set of first security authentication codes, the at least one first security authentication code one-to-one corresponds to the at least one subprocess in the software program. Further, the first security authentication code may include a randomly generated symbol or a random number.

102: Process, according to a first preset rule each time a subprocess runs, an input security authentication code corresponding to the subprocess, to obtain a second security authentication code.

In this embodiment, at least one second security authentication code one-to-one corresponds to at least one subprocess that has run, and each subprocess that has run in the process of running the software program corresponds to one input security authentication code and one second security authentication code. In a process of running software, the input security authentication code is input in each running subprocess, and then the input security authentication code is processed according to the first preset rule to obtain the second security authentication code. When the subprocess runs correctly, the input security authentication code corresponding to the subprocess is a first security authentication code corresponding to the subprocess.

103: When a relationship between the set of first security authentication codes and the second security authentication code meets a preset relationship, determine that the software program runs correctly.

In this embodiment, because the second security authentication code corresponding to each subprocess is obtained by processing, according to the first preset rule in each subprocess that has run, the input security authentication code that is input, the second security authentication code reflects a relationship between all subprocesses that has run. When the subprocess in the software program runs correctly, the input security authentication code input in the subprocess is the first security authentication code corresponding to the subprocess. Therefore, when all subprocesses in the software program run correctly, the relationship between the set of first security authentication codes and the second security authentication code should meet the preset relationship. Therefore, whether the software program runs correctly can be determined by comparing whether the relationship between the set of first security authentication codes and the second security authentication code meets the preset relationship.

It should be noted that the first preset rule and the preset relationship are not limited in this embodiment of this application. The first preset rule may be any algorithm, and the preset relationship may be any mathematical relationship. When the software program runs correctly, the first security authentication code corresponding to each subprocess is processed according to the first preset rule to obtain a second security authentication code corresponding to the subprocess. Therefore, when the software program runs correctly, the second security authentication code corresponding to each subprocess that has run is obtained by processing the corresponding first security authentication code according to the first preset rule. This complies with an input-output relationship in the first preset rule. Therefore, the preset relationship is the input-output relationship in the first preset rule. The set of first security authentication codes is an input, and the second security authentication code is an output.

In this embodiment, the first security authentication code corresponding to each subprocess is randomly generated according to a subprocess that needs to be followed when the software program works normally, to form the set of first security authentication codes. Then, in a process of specifically running the software, each time a subprocess correctly runs, a first security authentication code corresponding to the subprocess in the set of first security authentication codes is input, processed according to the first preset rule, and is output as a second security authentication code corresponding to the subprocess. Then, whether the software program runs correctly is determined by comparing whether the set of first security authentication codes and the set of second security authentication codes meet the preset relationship.

Implementing the foregoing method may determine whether the software program runs according to a preset subprocess, to form a check chain, and accurately determine whether each subprocess of the software program runs correctly. If the software program executes a wrong branch subprocess that is valid, the first security authentication code in the set of first security authentication codes is not input in a subprocess of the wrong branch. As a result, the set of first security authentication codes and the second security authentication code do not meet the preset relationship. In this case, the software program can be checked. In addition, only a corresponding first security authentication code needs to be added to the set of first security authentication codes when a subprocess is added to the software program in the foregoing manner. In addition, each set of first security authentication codes is associated with and bound to one running branch of the software program. Each running branch includes at least one subprocess, and the at least one subprocess one-to-one corresponds to first security authentication codes in the set of first security authentication codes. For the software program that has a plurality of running branches, each running branch can be checked by setting a corresponding set of first security authentication codes for a subprocess of each running branch. In this case, a code amount increases slightly. In addition, as complexity of the software program increases, complexity of the set of first security authentication codes remains almost unchanged. In addition, because the first security authentication code in the set of first security authentication codes is randomly generated before the software program runs, the first security authentication code is not easily predicted or tampered with, thereby improving security.

Further, refer to FIG. 1b. A specific manner of obtaining the second security authentication code in step 102 is further described below with reference to FIG. 1b.

1021: When a first subprocess in the software program runs, obtain an input security authentication code corresponding to the first subprocess, input security authentication codes corresponding to all subprocesses that have run before the first subprocess, and an initial authentication code.

In this embodiment, the first subprocess is a subprocess in the software program, there is no correspondence between the initial authentication code and a subprocess in the software program. The input security authentication code is a first security authentication code input when the first subprocess in the software program runs. If the software program runs correctly, the input security authentication code corresponding to the first subprocess is a first security authentication code corresponding to the first subprocess in the set of first security authentication codes.

1022: Process, according to the first preset rule, the initial authentication code, the input security authentication codes corresponding to all the subprocesses that have run before the first subprocess, and the input security authentication code corresponding to the first subprocess, to obtain a second security authentication code corresponding to the first subprocess.

In this embodiment, for example, the first preset rule is an algorithm f(x), the initial authentication code is x₀, the input security authentication codes corresponding to all the subprocesses that have run before the first subprocess are x₁ to xₙ, and the input security authentication code corresponding to the first subprocess is xₙ₊₁. In this case, the second security authentication code corresponding to the first subprocess is f(x₀, x₁, ..., xₙ, xₙ₊₁).

In the foregoing method, the initial authentication code does not correspond to a subprocess in the software program, and is used as an element that is first input into the first preset rule for calculation. This avoids calculating a null value according to the first preset rule, and improves stability of performing calculation according to the first preset rule.

It should be noted that, in the foregoing method, according to different security requirements in the process of running the software program, detecting whether the software program runs correctly may be determining, in real time in the process of running the software program, whether a subprocess runs correctly; or may be determining, after running of the software program ends, whether all the subprocesses run correctly. For ease of understanding, detailed descriptions are provided below with reference to two cases.
1. Determine, in real time in the process of running the software program, whether a subprocess runs correctly.

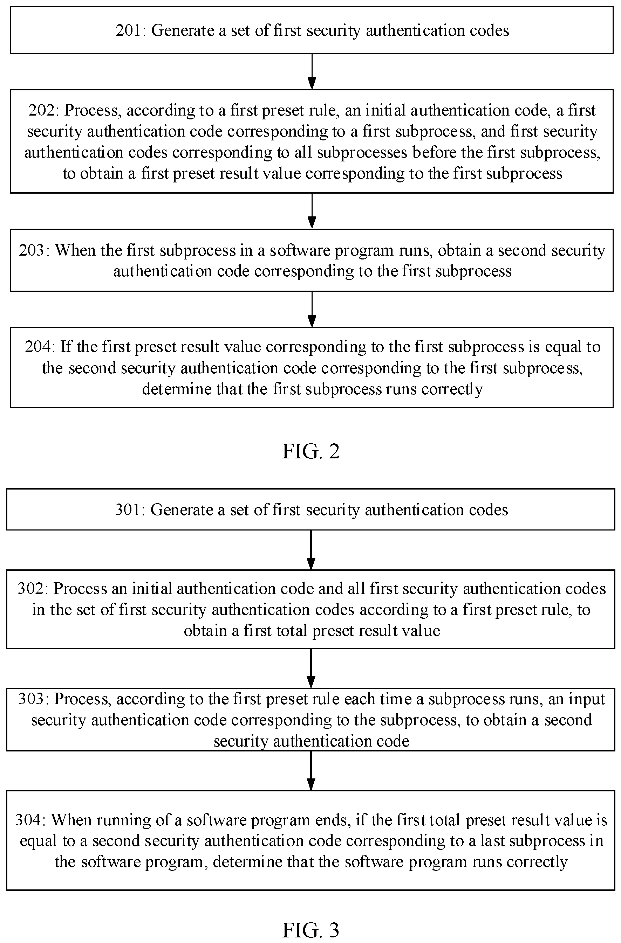

In this case, when each subprocess in the software program runs, it is determined whether the subprocess runs correctly, to determine in real time whether the subprocess in the software program runs correctly. For ease of understanding, with reference to the accompanying drawing, the following further describes this case by using an example in which a first subprocess in the software program runs in real time. As shown in FIG. 2, this case includes the following steps.

201: Generate a set of first security authentication codes.

In this embodiment, this step is the same as step 101, and details are not described herein again.

202: Process, according to a first preset rule, an initial authentication code, a first security authentication code corresponding to the first subprocess, and first security authentication codes corresponding to all subprocesses before the first subprocess, to obtain a first preset result value corresponding to the first subprocess.

In this embodiment, for example, the first preset rule is an algorithm f(x), the initial authentication code is x₀, the first security authentication codes corresponding to all the subprocesses before the first subprocess are x₁' to xₙ', and a first security authentication code corresponding to the first subprocess is xₙ₊₁'. In this case, the first preset result value corresponding to the first subprocess is f(x₀', x₁', ..., xₙ', xₙ₊₁').

203: When the first subprocess in the software program runs, obtain a second security authentication code corresponding to the first subprocess.

In this embodiment, for example, the first preset rule is an algorithm f(x), the initial authentication code is x₀, the input security authentication codes corresponding to all the subprocesses that have run before the first subprocess are x₁ to xₙ, and the input security authentication code corresponding to the first subprocess is xₙ₊₁. In this case, the second security authentication code corresponding to the first subprocess is f(x₀, x₁, ..., xₙ, xₙ₊₁).

204: If the first preset result value corresponding to the first subprocess is equal to the second security authentication code corresponding to the first subprocess, determine that the first subprocess runs correctly.

In this embodiment, the first preset result value corresponding to the first subprocess is:
f(x₀', x₁', ..., xₙ', xₙ₊₁').

The second security authentication code corresponding to the first subprocess is:
f(x₀, x₁, ..., xₙ, xₙ₊₁).

If the software program runs correctly, an input security authentication code corresponding to each subprocess is equal to a first security authentication code corresponding to the subprocess, and x₀', x₁', ..., xₙ', and xₙ₊₁' are respectively equal to x₀, x₁, ..., xₙ, xₙ₊₁. Because the first preset rule f(x) is a same algorithm, when the first subprocess correctly runs, the first preset result value corresponding to the first subprocess and the second security authentication code corresponding to the first subprocess are equal and meet a preset relationship.

It should be noted that, in a process of running the software program, if it is detected that the second security authentication code corresponding to the first subprocess is different from the first preset result value corresponding to the first subprocess, it is determined that the software program runs abnormally. In this case, it may be determined that the software program runs abnormally, without performing a subsequent subprocess determining step.

In this embodiment, a first preset result value corresponding to each subprocess running in the software program is generated for the subprocess. When a subprocess runs in the process of running the software program, a second security authentication code corresponding to the subprocess is compared with a first preset result value corresponding to the subprocess. If the second security authentication code corresponding to the subprocess is the same as the first preset result value corresponding to the subprocess, it is determined that the subprocess runs normally, to monitor, in real time, each subprocess in the process of running the software program. When a running error occurs in one of the subprocesses, the error can be found in a timely manner and a subprocess in which the error occurs can be accurately located, preventing the software program from continuing to run after the error occurs in the subprocesses.

It should be noted that, in the foregoing method, comparison and determining need to be performed once on each subprocess running in the software program. This is time-consuming. In addition, time required for comparison and determining also slows down a software program running speed. Therefore, the following solutions may be applied to some scenarios that have a requirement on a software program running speed.

2. After running of the software program ends, determine whether all subprocesses run correctly.

In this case, determining is performed only once after running of the software program ends. Whether the entire software program runs normally is determined by analyzing whether all the subprocesses in the software program run normally. For ease of understanding, the following further describes this case with reference to the accompanying drawing. As shown in FIG. 3, this case includes the following steps.

301: Generate a set of first security authentication codes.

In this embodiment, this step is the same as step 101, and details are not described herein again.

302: Process an initial authentication code and all first security authentication codes in the set of first security authentication codes according to a first preset rule, to obtain a first total preset result value.

In this embodiment, for example, the first preset rule is f(x), the initial authentication code is x₀', the software program includes a total of n subprocesses, and the n subprocesses correspond to the first security authentication codes x₁' to xₙ' respectively. In this case, the first total preset result value is f(x₀', x₁', ..., xₙ').

303: Process, according to the first preset rule each time a subprocess runs, an input security authentication code corresponding to the subprocess, to obtain a second security authentication code.

In this embodiment, a step of obtaining the second security authentication code is the same as the foregoing step 102 and detailed steps 1021 and 1022. For example, the first preset rule is an algorithm f(x), the initial authentication code is x₀, and input security authentication codes corresponding to all subprocesses that have run are x ₁ to xₙ after running of the software program ends. In this case, the second security authentication code corresponding to a last subprocess is f(x₀, x₁, ..., xₙ).

304: When running of the software program ends, if the first total preset result value is equal to the second security authentication code corresponding to the last subprocess in the software program, determine that the software program runs correctly.

In this embodiment, the second security authentication code is obtained by processing, according to the first preset rule, the initial authentication code, an input security authentication code corresponding to a current subprocess, and input security authentication codes corresponding to all subprocesses that have run before the current subprocess. Therefore, the second security authentication code reflects a relationship between the current subprocess and all the subprocesses that have run before the current subprocess. When running of the software program ends, if the second security authentication code f(x₀, x₁, ..., xₙ) corresponding to the last subprocess is equal to the first total preset result value f(x₀', x₁', ..., xₙ'), it indicates that all the subprocesses in the software program are executed as expected. In this way, it can be determined that the software program runs correctly.

In this embodiment, comparison and determining are performed only once when running of the software ends, to determine whether the entire software program runs correctly. This embodiment has the following advantage: After the set of first security authentication codes is generated, only one first total preset result value needs to be generated, and no additional comparison operation is performed in the process of running the software program. Whether the software program runs correctly can be determined only by comparing, after running of the software program ends, whether the second security authentication code corresponding to the last subprocess is equal to the first total preset result value. Comparison and determining need to be performed only once regardless of a quantity of subprocesses in the software program. As complexity of the software program increases, less computing power resources of a processor are occupied.

It should be noted that the first preset rule may be any operation rule, for example, exclusive OR, addition, subtraction, multiplication, or division. This is not limited in this embodiment of this application.

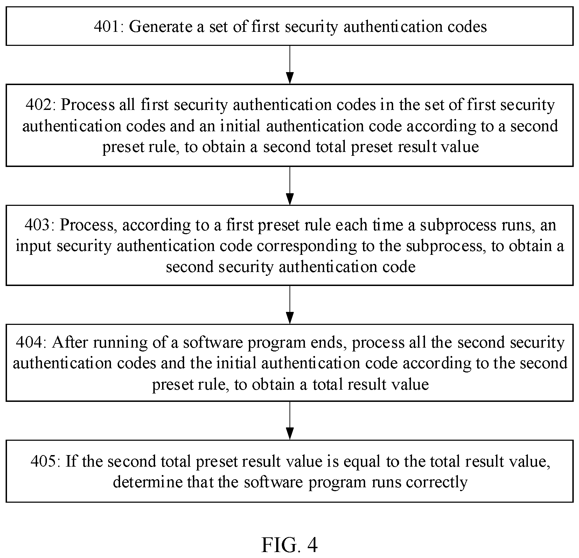

Optionally, the first preset rule may alternatively be that an input is equal to an output. In this case, the method for checking running of the software program provided in this embodiment of this application includes the following steps. For ease of understanding, the following further describes this case with reference to the accompanying drawing. As shown in FIG. 4, this case includes the following steps.

401: Generate a set of first security authentication codes.

In this embodiment, this step is the same as step 101, and details are not described herein again.

402: Process all first security authentication codes in the set of first security authentication codes and an initial authentication code according to a second preset rule, to obtain a second total preset result value.

In this embodiment, for example, the second preset rule is an algorithm f(x), the initial authentication code is x₀', and all the first security authentication codes in the set of first security authentication codes are x₁' to xₙ'. In this case, the second total preset result value is f(x₀', x₁', ..., xₙ').

403: Process, according to a first preset rule each time a subprocess runs, an input security authentication code corresponding to the subprocess, to obtain a second security authentication code.

In this embodiment, when a first subprocess in the software program runs, an input security authentication code corresponding to the first subprocess is used as a second security authentication code corresponding to the first subprocess. Each subprocess running in the software program is performed in this manner, to obtain, when running of the software program ends, a set of second security authentication codes including a second security authentication code corresponding to each subprocess that has run in the software program.

The first subprocess is a subprocess in the process of running the software program. In this case, for the first preset rule, an input is equal to an output, that is, the output of the first preset rule is equal to the input of the first preset rule. Therefore, when the first subprocess in the software program runs, the input security authentication code corresponding to the first subprocess is directly used as the second security authentication code corresponding to the first subprocess. When the software program runs correctly, the input security authentication code corresponding to the first subprocess is equal to the first security authentication code corresponding to the first subprocess. In other words, if the first subprocess runs correctly, the first security authentication code corresponding to the first subprocess is equal to the second security authentication code corresponding to the first subprocess.

404: After running of the software program ends, process all the second security authentication codes and the initial authentication code according to the second preset rule, to obtain a total result value.

In this embodiment, for example, the second preset rule is an algorithm f(x), the initial authentication code is x₀, and all the second security authentication codes in the set of second security authentication codes are x₁ to xₙ. In this case, the total result value is f(x₀, x₁, ..., xₙ).

405: If the second total preset result value is equal to the total result value, determine that the software program runs correctly.

In this embodiment, for the first preset rule, the input is equal to the output. In this case, in the process of running the software program, the input security authentication code is directly output as the second security authentication code, without performing calculation. This further reduces a calculation amount in the process of running the software program. Before the software runs, all the first security authentication codes in the set of first security authentication codes are processed according to the second preset rule, to obtain the second total preset result value. After running of the software program ends, all the second security authentication codes in the set of second security authentication codes are processed according to the second preset rule, to obtain the total result value. If a specific subprocess in the software program is bypassed or tampered with, a second security authentication code corresponding to the subprocess is not equal to a first security authentication code. As a result, a final total result value is not equal to the second total preset result value. In this way, whether the software program runs correctly is monitored correctly.

It should be noted that the second preset rule may be any operation rule, for example, exclusive OR, addition, subtraction, multiplication, or division. This is not limited in this embodiment of this application.

Optionally, the first preset rule and the second preset rule are stored in a software variable of the software program or a hardware logic register. A hardware logic circuit triggers calculation performed according to the first preset rule and the second preset rule. In an optional case, the hardware logic register is a component of the hardware logic circuit, or the hardware logic register may be outside the hardware logic circuit and is independent of a processor that runs the software program. In this way, even if a subprocess in the software program is tampered with or bypassed, work of the hardware logic circuit is not bypassed. Therefore, all preset result values corresponding to the first preset rule and all preset result values corresponding to the second preset rule are stored in the hardware logic register, so that there is a higher confidentiality level for the first preset rule and the second preset rule. In each subprocess running in the software program, an input security authentication code corresponding to the subprocess is input into the software variable or the hardware logic register, so that the input security authentication code can be processed according to the first preset rule, and the second security authentication code can be processed according to the second preset rule. In an optional case, the steps of determining whether the second security authentication code and the set of first security authentication codes meet the preset relationship and determining whether the software program runs correctly are performed by using the hardware logic circuit, and the hardware logic circuit is independent of a processor that runs the software program. Whether the software program runs normally is determined by a hardware circuit independent of the processor, and a determining process is not easily bypassed. This ensures that a running check method is not bypassed or tampered with, and improves stability of the method.

A specific working manner in which the first preset rule is stored in the hardware logic register is described in detail below, and specifically includes the following two steps:
1: Each time a subprocess runs, input an input security authentication code into the hardware logic register of the hardware logic circuit.
   In this embodiment, if the subprocess runs correctly, the input security authentication code input into the hardware logic register is a first security authentication code corresponding to the subprocess.
2: The hardware logic circuit processes the input security authentication code according to a prestored first preset rule, to obtain a second security authentication code.

In this embodiment, the first preset rule is stored in the hardware logic register of the hardware logic circuit, and the hardware logic circuit processes the input security authentication code that is input, to obtain the second security authentication code corresponding to the subprocess. As a hardware condition, the hardware logic circuit cannot be tampered with or bypassed at a software layer. This further improves security of a method for checking running of a software program.

It should be noted that the foregoing hardware logic circuit may be a hardware circuit that can read code to execute a program, a processor core with a register, or a chip such as an SoC or a processor. Regardless of whether the logical register is a hardware circuit, a processor core, or a chip, the logical register is independent of a processor that runs the software program. In this case, even if the processor that runs the software program is tampered with, the hardware logic circuit can process, according to the first preset rule, an input security authentication code that is input, to perform a method for checking running of a software program provided in this embodiment of this application. This further ensures security.

Further, a method for executing the second preset rule in the hardware logic circuit is similar to that described above, and may be understood with reference to the foregoing example and the foregoing steps 401 to 405. Details are not described herein again.

It should be noted that the subprocesses in the foregoing method may be some subprocesses related to running security of the software program in the process of running the software program. Running of the some subprocesses is controlled to ensure correct running of the software program. This avoids a case that excessive subprocesses cause an excessive calculation amount and waste computing power resources. Further, the at least one subprocess may be a subprocess that is repeatedly used in a software program, or the at least one subprocess may be a subprocess including some deterministic steps in a software program whose running program is nondeterministic. Still further, the software program may be any software program. This is not limited in this embodiment of this application.

Preferably, the method for checking running of the software program provided in this embodiment of this application may be applied to all scenarios that have a strict security requirement on a subprocess. Secure boot and protocol authentication are typical application scenarios. For ease of understanding of a specific application scenario of this application, in an example, with reference to the accompanying drawing, the following describes in detail specific application, to secure boot and protocol authentication, of the method for checking running of the software program provided in an embodiment of this application.

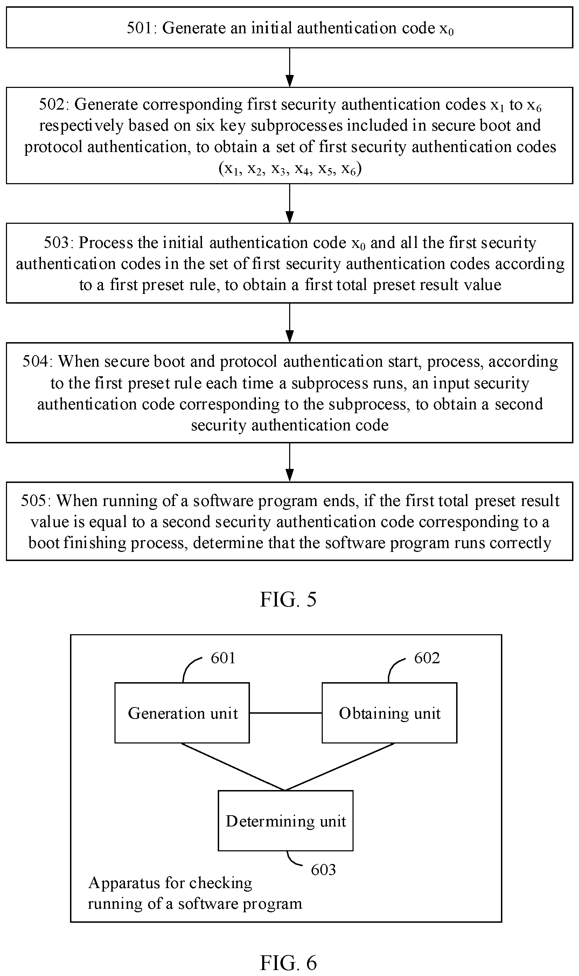

As shown in FIG. 5, some subprocesses in secure boot and protocol authentication include boot initialization, flash data reading, key and parameter authentication, system initialization, code authentication, and a boot finishing process. Application, to secure boot and protocol authentication, of a method for checking running of a software program provided in an embodiment of this application includes the following steps.

501: Generate an initial authentication code x₀.

In this embodiment, as described above, the initialization authentication code x₀ is input, to avoid a case in which a set is empty when an input security authentication code is processed according to a first preset rule.

502: Generate corresponding first security authentication codes x₁ to x₆ respectively based on six key subprocesses included in secure boot and protocol authentication, to obtain a set of first security authentication codes (x₁, x₂, x₃, x₄, x₅, x₆).

In this embodiment, boot initialization corresponds to the first security authentication code x₁, flash data reading corresponds to the first security authentication code x₂, key (key) and parameter authentication corresponds to the first security authentication code x₃, system initialization corresponds to the first security authentication code x₄, and code authentication corresponds to the first security authentication code x₅, and the boot finishing process corresponds to the first security authentication code x₆. x₁ to x₆ may be random numbers or symbols.

503: Process the initial authentication code x₀ and all the first security authentication codes in the set of first security authentication codes according to the first preset rule, to obtain a first total preset result value.

In this embodiment, the initial authentication code x₀ and the random numbers in the set of first security authentication codes (x₁, x₂, x₃, x₄, x₅, x₆) are calculated according to the first preset rule, to obtain the first total preset result value. For example, if the first preset rule is f(x), the first total preset result value is f(x₀, x₁, x₂, x₃, x₄, x₅, x₆), where f(x) may be exclusive OR, addition, subtraction, multiplication, division, or another algorithm.

504: When secure boot and protocol authentication start, process, according to the first preset rule each time a subprocess runs, an input security authentication code corresponding to the subprocess, to obtain a second security authentication code.

In this embodiment, if a software program runs correctly (the input security authentication code is equal to a first security authentication code), the obtaining a second security authentication code includes the following steps:

5041: In a boot initialization step, obtain the initial authentication code x₀ and an input security authentication code x₁ corresponding to the boot initialization step.

5042: Process, according to the first preset rule f(x), the initial authentication code x₀ and the input security authentication code x₁ corresponding to the boot initialization step, to obtain a second security authentication code y₁ corresponding to the boot initialization step, where y₁ = f(x₀, x₁).

5043: In a flash data reading step, obtain the initial authentication code x₀, the input security authentication code x₁ corresponding to the boot initialization step, and an input security authentication code x₂ corresponding to the flash data reading step.

5044: Process, according to the first preset rule f(x), the initial authentication code x₀, the input security authentication code x₁ corresponding to the boot initialization step, and the input security authentication code x₂ corresponding to the flash data reading step, to obtain a second security authentication code y₂ corresponding to the flash data reading step, where y₂ = f(x₀, x₁, x₂).

5045: In a key and parameter authentication step, obtain the initial authentication code x₀, the input security authentication code x₁ corresponding to the boot initialization step, the input security authentication code x₂ corresponding to the flash data reading step, and an input security authentication code x₃ corresponding to the key and parameter authentication step.

5046: Process, according to the first preset rule f(x), the initial authentication code x₀, the input security authentication code x₁ corresponding to the boot initialization step, the input security authentication code x₂ corresponding to the flash data reading step, and the input security authentication code x₃ corresponding to the key and parameter authentication step, to obtain a second security authentication code y₃ corresponding to the key and parameter authentication step, where y₃ = f(x₀, x₁, x₂, x₃).

5047: In a system initialization step, obtain the initial authentication code x₀, the input security authentication code x₁ corresponding to the boot initialization step, the input security authentication code x₂ corresponding to the flash data reading step, the input security authentication code x₃ corresponding to the key and parameter authentication step, and an input security authentication code x₄ corresponding to the system initialization step.

5048: Process, according to the first preset rule f(x), the initial authentication code x₀, the input security authentication code x₁ corresponding to the boot initialization step, the input security authentication code x₂ corresponding to the flash data reading step, the input security authentication code x₃ corresponding to the key and parameter authentication step, and the input security authentication code x₄ corresponding to the system initialization step, to obtain a second security authentication code y₄ corresponding to the system initialization step, where y₄ = f(x₀, x₁, x₂, x₃, x₄).

5049: In a code authentication step, obtain the initial authentication code x₀, the input security authentication code x₁ corresponding to the boot initialization step, the input security authentication code x₂ corresponding to the flash data reading step, the input security authentication code x₃ corresponding to the key and parameter authentication step, the input security authentication code x₄ corresponding to the system initialization step, and an input security authentication code x₅ corresponding to the code authentication step.

50410: Process, according to the first preset rule f(x), the initial authentication code x₀, the input security authentication code x₁ corresponding to the boot initialization step, the input security authentication code x₂ corresponding to the flash data reading step, the input security authentication code x₃ corresponding to the key and parameter authentication step, the input security authentication code x₄ corresponding to the system initialization step, and the input security authentication code x₅ corresponding to the code authentication step, to obtain a second security authentication code y₅ corresponding to the system initialization step, where y₅ = f(x₀, x₁, x₂, x₃, x₄, x₅).

50411: In the code authentication step, obtain the initial authentication code x₀, the input security authentication code x₁ corresponding to the boot initialization step, the input security authentication code x₂ corresponding to the flash data reading step, the input security authentication code x₃ corresponding to the key and parameter authentication step, the input security authentication code x₄ corresponding to the system initialization step, the input security authentication code x₅ corresponding to the code authentication step, and an input security authentication code x₆ corresponding to a boot finishing process step.

50412: Process, according to the first preset rule f(x), the initial authentication code x₀, the input security authentication code x₁ corresponding to the boot initialization step, the input security authentication code x₂ corresponding to the flash data reading step, the input security authentication code x₃ corresponding to the key and parameter authentication step, the input security authentication code x₄ corresponding to the system initialization step, the input security authentication code x₅ corresponding to the code authentication step, and the input security authentication code x₆ corresponding to the boot finishing process step, to obtain a second security authentication code y₆ corresponding to the boot finishing process step, where y₆ = f(x₀, x₁, x₂, x₃, x₄, x₅, x₆).

505: When running of the software program ends, if the first total preset result value is equal to the second security authentication code corresponding to the boot finishing process, determine that the software program runs correctly.

In this embodiment, the first total preset result value is f(x₀, x₁, x₂, x₃, x₄, x₅, x₆), and the second security authentication code corresponding to the boot finishing process step is y₆, where y₆ = f(x₀, x₁, x₂, x₃, x₄, x₅, x₆). When the software program runs correctly, an input security authentication code corresponding to each subprocess is equal to a first security authentication code corresponding to the subprocess. In this case, when the first total preset result value is equal to the second security authentication code corresponding to the boot finishing process, it may be determined that the software program runs normally. Because calculation of the second security authentication code involves each subprocess by using the first preset rule f(x), the second security authentication code is not equal to the first total preset result value once any subprocess in the software program is tampered with or bypassed, so that whether each subprocess in the software program runs correctly can be accurately determined.

It should be noted that the method used in the foregoing steps 501 to 505 is the method provided in steps 301 to 304 for determining whether all the subprocesses run correctly after running of the software program ends. In an actual working process, according to a use requirement, the method provided in steps 201 to 204 may be further used to determine, in real time in the process of running the software program, whether a subprocess runs correctly; the method provided in steps 401 to 405 may be used to detect whether the software program runs correctly. Details are not described herein again.

It should be further noted that, in any case described in this embodiment of this application, an occasion in which the input security authentication code is processed according to the first preset rule to obtain a second security authentication code corresponding to a current subprocess may start when it is detected that the current subprocess starts to run, may start in a running process of the current subprocess, or may start after running of the current subprocess ends. This is not limited in this embodiment of this application.

In this embodiment of this application, some determined subprocesses that affect running security of the software program are designed, and the set of first security authentication codes is formed by introducing the first security authentication codes to pre-establish a determined relationship between the subprocesses, so as to serve as a check chain. In the process of running the software program, an operation is performed in each subprocess by using a pre-allocated first security authentication code, so that each subprocess becomes an operation step in the check chain, and an operation result is checked at the end of the process. If the software program runs correctly, that is, each subprocess runs correctly, the final operation result needs to meet the predetermined relationship. If one of the subprocesses runs abnormally, the final check fails.

A random number or a randomly generated symbol may lead to a different check result each time running of software ends. As a result, a value to be compared cannot be predicted. In addition, the final comparison may be implemented based on hardware logic. An operation result of each subprocess is stored in the hardware logic register, and the comparison is triggered by using a hardware condition. In this way, even if a final software comparison is tampered with or bypassed, the comparison of the hardware logic is not bypassed. The foregoing method may also be implemented by using a software variable. This solution is equivalent to adding a chain to a specific subprocess in the software program. If one of the subprocesses is faulty, an exception occurs. For a software process including a plurality of running branches, each key path may be designed as a chain for check. In this way, whether each subprocess in the software program runs correctly can be accurately checked. In addition, complexity of the checking method is reduced, only a specific quantity of random numbers/symbols and a specific amount of negligible code need to increase, and the complexity of the checking method remains almost unchanged as program complexity increases.

An embodiment of this application further provides an apparatus for checking running of a software program. The software program checked by the apparatus for checking running of the software program includes at least one subprocess, each of the at least one subprocess corresponds to one secure operation, and the software program runs on a processor. For ease of understanding, the following provides specific description with reference to the accompanying drawings. As shown in FIG. 6, the apparatus includes:
a generation unit 601, where the generation unit 601 is configured to generate a set of first security authentication codes, where the set of first security authentication codes is a set randomly generated before the software program runs, the set of first security authentication codes includes at least one first security authentication code, and the at least one first security authentication code one-to-one corresponds to the subprocesses in the software program;
an obtaining unit 602, where the obtaining unit 602 is configured to process an input security authentication code according to a first preset rule each time a subprocess runs, to obtain a second security authentication code, where each subprocess that has run in a process of running the software program corresponds to one input security authentication code and one second security authentication code; and when the subprocess runs correctly, the input security authentication code is equal to a first security authentication code that corresponds to the subprocess and that is generated by the generation unit 601; and
a determining unit 603, where the determining unit 603 is configured to: when a relationship between the set of first security authentication codes generated by the generation unit 601 and the second security authentication code obtained by the obtaining unit 602 meets a preset relationship, determine that the software program runs correctly.

In this embodiment, the set of first security authentication codes randomly generated by the generation unit 601 before the software program runs is used to learn of all subprocesses that should be executed when the software program runs normally. In a process of actually running the software, the obtaining unit 602 processes the input security authentication code according to the first preset rule each time the subprocess runs, to obtain the second security authentication code. The second security authentication code reflects an execution status of a subprocess in the software program. In this case, when the relationship between the set of first security authentication codes and the second security authentication code meets the preset relationship, the determining unit 603 determines that the software program runs correctly. In this way, a software program running status is monitored. Because the set of first security authentication codes is randomly generated each time before the software runs, security is further increased, and the set of first security authentication codes is prevented from being stolen and forged to evade a check process.

Optionally, the obtaining unit 602 is further configured to: when a first subprocess in the software program runs, obtain an input security authentication code corresponding to the first subprocess, input security authentication codes corresponding to all subprocesses that have run before the first subprocess, and an initial authentication code, where there is no correspondence between the initial authentication code and a subprocess in the software program; the first subprocess is a subprocess in the software program; and when the first subprocess runs correctly, the input security authentication code corresponding to the first subprocess is a first security authentication code that corresponds to the first subprocess and that is generated by the generation unit 601; and process, according to the first preset rule, the initial authentication code, the input security authentication codes corresponding to all the subprocesses that have run before the first subprocess, and the input authentication code corresponding to the first subprocess, to obtain a second security authentication code corresponding to the first subprocess.

In this embodiment, the second security authentication code corresponding to each subprocess that has run is obtained after the obtaining unit 602 processes, according to the first preset rule, the input security authentication code corresponding to the first subprocess, the input security authentication codes corresponding to all the subprocesses that have run before the first subprocess, and the initial authentication code. Therefore, the second security authentication code reflects an association relationship between the subprocesses that have run. When a subprocess runs correctly, an input security authentication code corresponding to the subprocess is a first security authentication code corresponding to the process. Therefore, the second security authentication code and the set of first security authentication codes meet the preset relationship only when each subprocess that has run correctly. In this way, whether each subprocess in the software program runs correctly can be determined by comparing a second security authentication code with a first security authentication code.

Optionally, the determining unit 603 is further configured to: process, according to the first preset rule, the initial authentication code, the first security authentication code that corresponds to the first subprocess and that is generated by the generation unit 601, and first security authentication codes that correspond to all subprocesses before the first subprocess and that are generated by the generation unit 601, to obtain a first preset result value corresponding to the first subprocess; and when the first subprocess in the software program runs and the first preset result value is equal to the second security authentication code that corresponds to the first subprocess and that is obtained by the obtaining unit 602, determine that the first subprocess runs correctly.

In this embodiment, the first subprocess is a subprocess in the software program. The determining unit 603 calculates a preset result value corresponding to each subprocess, and compares, when a subprocess in the software program runs, a second security authentication code corresponding to the subprocess with a preset result value corresponding to the subprocess, to determine whether the subprocess runs correctly. In this way, running of a software process is detected in real time, and a running error can be determined in a timely manner when the error occurs in a specific subprocess. In addition, when a running error of a subprocess is detected, a method for checking a software program may not be subsequently performed, and a running error of the software program is directly determined.

Optionally, the determining unit 603 is further configured to: process, according to the first preset rule, the initial authentication code and all first security authentication codes in the set of first security authentication codes generated by the generation unit 601, to obtain a first total preset result value; and when running of the software program ends and the first total preset result value is equal to a second security authentication code that corresponds to a last subprocess running in the software program and that is obtained by the obtaining unit 602, determine that the software program runs correctly.

In this embodiment, before the software program runs, the determining unit 603 processes the initial authentication code and all the first security authentication codes in the set of first security authentication codes according to the first preset rule, to obtain the first total preset result value, and obtain the first total preset result value when the software program runs normally. Then, when running of the software program ends, the determining unit 603 compares the second security authentication code corresponding to the last subprocess running in the software program with the first total preset result value. The second security authentication code corresponding to the last subprocess running in the software program is obtained by processing, according to the first preset rule, the initial authentication code and the input security authentication codes corresponding to all the subprocesses. Therefore, when the software program runs correctly, the input security authentication code is equal to the first security authentication code. In this case, the first total preset result value is equal to the second security authentication code corresponding to the last subprocess running in the software program. Whether all the subprocesses in the entire software program run correctly can be determined through only one comparison after running of the software program ends.

Optionally, the obtaining unit 602 is further configured to: when the first subprocess in the software program runs, use the input security authentication code corresponding to the first subprocess as the second security authentication code corresponding to the first subprocess. The determining unit 603 is further configured to: process all first security authentication codes in the set of first security authentication codes generated by the generation unit 601 and the initial authentication code according to a second preset rule, to obtain a second total preset result value; after running of the software program ends, process all second security authentication codes obtained by the obtaining unit 602 and the initial authentication code according to the second preset rule to obtain a total authentication result value; and when the second total preset result value is equal to the total authentication result value, determine that the software program runs correctly.

In this embodiment, the first preset rule is an input-output rule, and the input security authentication code corresponding to the first subprocess is directly used as the second security authentication code corresponding to the first subprocess, to obtain a set of second security authentication codes when running of the software program ends. Then, the set of second security authentication codes is processed according to the second preset rule to obtain the total authentication result value. Before the software program runs, the set of first security authentication codes is processed according to the same second preset rule to obtain the second total preset result value. Therefore, it can be determined that the software program runs normally, provided that the second total preset result value is equal to the total authentication result value.

Optionally, the determining unit 603 is further configured to: determine, by using a hardware logic circuit, whether a relationship between the set of first security authentication codes generated by the generation unit 601 and the second security authentication code obtained by the obtaining unit 602 meets the preset relationship; and when the relationship between the set of first security authentication codes and the second security authentication code meets the preset relationship, determine, by using the hardware logic circuit, that the software program runs correctly. The hardware logic circuit is independent of the processor.

In this embodiment, the hardware logic circuit compares the set of first security authentication codes with the second security authentication code, so that work of the hardware logic circuit is not bypassed even if a subprocess in the software program is tampered with or bypassed. Therefore, all preset result values corresponding to the first preset rule and all preset result values corresponding to the second preset rule are stored in a hardware logic register, so that there is a higher confidentiality level for the comparison between the set of first security authentication codes and the second security authentication code. This further improves security.

Optionally, the first preset rule is stored in a software variable of the software program or a hardware logic register. The first preset rule is exclusive OR, addition, subtraction, multiplication, or division.

In this embodiment, the first preset rule is stored in the software variable of the software program, so that the processor running may obtain the first preset rule for calculation. Further, if the first preset rule is stored in the hardware logic register, the first preset rule can have a higher confidentiality level. The hardware logic register cannot be bypassed even if the software program is tampered with. This improves security.

Optionally, the first security authentication code, the second security authentication code, and the initial authentication code include a symbol or a random number.

In this embodiment of this application, because the first security authentication code in the set of first security authentication codes is randomly generated before the software program runs, the first security authentication code may be a randomly generated symbol or a random number, to facilitate calculation according to the first preset rule or the second preset rule.

Optionally, the at least one subprocess is a subprocess that is repeatedly used in the software program, or the at least one subprocess is a subprocess including some deterministic steps in a software program whose running program is nondeterministic.

Optionally, the software program includes secure boot or protocol authentication. The at least one subprocess includes boot initialization, flash data reading, key and parameter authentication, system initialization, code authentication, and a boot finishing process.

In this embodiment, secure boot or protocol authentication is a typical scenario that has a requirement on running security of the software program. Subprocesses that affect running security of secure boot or protocol authentication include the boot initialization process, the flash data reading process, the key and parameter authentication process, the system initialization process, the code authentication process, and the boot finishing process. In this way, whether entire secure boot or protocol authentication runs correctly can be monitored by determining the foregoing subprocesses.

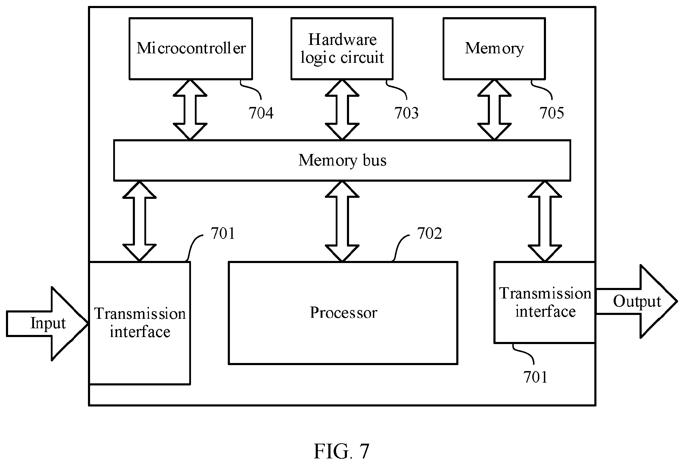

An embodiment of this application further provides an electronic device. For ease of understanding, the following provides specific description with reference to the accompanying drawings. As shown in FIG. 7, the electronic device includes a transmission interface 701, a processor 702, a hardware logic circuit 703, and a microcontroller 704. Optionally, the electronic device may further include a memory 705 or a hardware logic register (not shown in the figure). In an optional case, the hardware logic register is a component of the hardware logic circuit 703, or the hardware logic register may be outside the hardware logic circuit 703 and is independent of the processor 702 that runs a software program. All components of the electronic device are coupled by using connectors. It should be understood that, in this embodiment of this application, coupling refers to mutual connection in a specified manner, including indirect connection by using another device or direct connection. For example, the components may be connected through various interfaces, transmission lines, buses, or the like. These interfaces are usually electrical communication interfaces, but it is not excluded that the interfaces may be mechanical interfaces or interfaces in another form. This is not limited in this embodiment. The transmission interface may include a receiving interface and a sending interface. The processor 702 may be a single-core processor (single-CPU) or a multi-core processor (multi-CPU). Optionally, the processor 702 may be a processor group including a plurality of processors, and the plurality of processors are coupled to each other through one or more buses.

The memory 705 may be configured to store computer program instructions that include an operating system (OS), various user application programs, a checked software program, and various computer program code including program code used to execute the solutions of this application. The memory may be further configured to store video data, image data, and the like. The CPU may be configured to execute the computer program code stored in the memory, to implement the method in the embodiments of this application. Optionally, the memory may be a nonvolatile memory, for example, an embedded multimedia card (EMMC), a universal flash storage (UFS), or a read-only memory (ROM); may be another type of static storage device that can store static information and instructions; may be a volatile memory, for example, a random access memory (RAM) or another type of dynamic storage device that can store information and instructions; or may be an electrically erasable programmable read-only memory (EEPROM), a compact disc read-only memory (CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other computer-readable storage medium that can be configured to carry or store program code in a form of instructions or a data structure and can be accessed by a computer. However, the memory is not limited thereto. A chip in the embodiments of this application is a system manufactured on a same semiconductor substrate by using an integrated circuit technology, and is also referred to as a semiconductor chip. The chip may be a set of integrated circuits formed on the substrate (which is usually a semiconductor material such as silicon) by using the integrated circuit technology, and an outer layer of the chip is usually packaged with a semiconductor packaging material. The integrated circuit may include various types of functional devices. Each type of functional devices includes a logic gate circuit and a transistor such as a metal-oxide-semiconductor (MOS) transistor, or a bipolar transistor or a diode; or may include another component such as a capacitor, a resistor, or an inductor. Each functional device may operate independently or operate after being driven by necessary driver software, and may implement various functions such as communication, operation, or storage.

The processor 702 is configured to: generate a set of first security authentication codes, where the set of first security authentication codes is a set randomly generated before the software program runs, the set of first security authentication codes includes at least one first security authentication code, and the at least one first security authentication code one-to-one corresponds to subprocesses in the software program; process an input security authentication code according to a first preset rule each time a subprocess runs, to obtain a second security authentication code, where the first preset rule may be a mathematical algorithm, each subprocess that has run in a process of running the software program corresponds to one input security authentication code and one second security authentication code; and when the subprocess runs correctly, the input security authentication code is equal to a first security authentication code corresponding to the subprocess; and when a relationship between the set of first security authentication codes generated by the processor 702 and the second security authentication code meets a preset relationship, determine that the software program runs correctly.

In this embodiment, the set of first security authentication codes randomly generated before the software program runs is used to learn of all subprocesses that should be executed when the software program runs normally. In a process of actually running the software, the input security authentication code is processed according to the first preset rule each time the subprocess runs, to obtain the second security authentication code. The second security authentication code reflects an execution status of a subprocess in the software program. In this case, when the relationship between the set of first security authentication codes and the second security authentication code meets the preset relationship, it is determined that the software program runs correctly. In this way, a software program running status is monitored. Because the set of first security authentication codes is randomly generated each time before the software runs, security is further increased, and the set of first security authentication codes is prevented from being stolen and forged to evade a check process.

Optionally, the processor 702 is further configured to: when a first subprocess in the software program runs, obtain an input security authentication code corresponding to the first subprocess, input security authentication codes corresponding to all subprocesses that have run before the first subprocess, and an initial authentication code, where the initial authentication code is an authentication code randomly generated before the software program runs; there is no correspondence between the initial authentication code and a subprocess in the software program; the first subprocess is a subprocess in the software program; and when the first subprocess runs correctly, the input security authentication code corresponding to the first subprocess is a first security authentication code corresponding to the first subprocess; and process, according to the first preset rule, the initial authentication code, the input security authentication codes corresponding to all the subprocesses that have run before the first subprocess, and the input authentication code corresponding to the first subprocess, to obtain a second security authentication code corresponding to the first subprocess.

In this embodiment, the second security authentication code corresponding to each subprocess that has run is obtained after the input security authentication code corresponding to the first subprocess, the input security authentication codes corresponding to all the subprocesses that have run before the first subprocess, and the initial authentication code are processed according to the first preset rule. Therefore, the second security authentication code reflects an association relationship between the subprocesses that have run. When a subprocess runs correctly, an input security authentication code corresponding to the subprocess is a first security authentication code corresponding to the process. Therefore, the second security authentication code and the set of first security authentication codes meet the preset relationship only when each subprocess that has run correctly. In this way, whether each subprocess in the software program runs correctly can be determined by comparing a second security authentication code with a first security authentication code.

Optionally, the processor 702 is further configured to: process, according to the first preset rule, the initial authentication code, the first security authentication code corresponding to the first subprocess, and first security authentication codes corresponding to all the subprocesses before the first subprocess, to obtain a first preset result value corresponding to the first subprocess, where each subprocess that needs to be monitored in the process of running the software program corresponds to one preset result value in a same processing manner, and the first preset result value may be stored in the hardware logic register; and when the first subprocess in the software program runs and the first preset result value is equal to the second security authentication code corresponding to the first subprocess, determine that the first subprocess runs correctly.

In this embodiment, the first subprocess is a subprocess in the software program. A preset result value corresponding to each subprocess is calculated; and when a subprocess in the software program runs, a second security authentication code corresponding to the subprocess is compared with a preset result value corresponding to the subprocess, to determine whether the subprocess runs correctly. In this way, running of a software process is detected in real time, and a running error can be determined in a timely manner when the error occurs in a specific subprocess. In addition, when a running error of a subprocess is detected, a method for checking a software program may not be subsequently performed, and a running error of the software program is directly determined.

Optionally, the processor 702 is further configured to: process, according to the first preset rule, the initial authentication code and all first security authentication codes in the set of first security authentication codes, to obtain a first total preset result value, where the first total preset result value may be stored in the hardware logic register; and when running of the software program ends and the first total preset result value is equal to a second security authentication code corresponding to a last subprocess running in the software program, determine that the software program runs correctly.

In this embodiment, before the software program runs, the initial authentication code and all the first security authentication codes in the set of first security authentication codes are processed according to the first preset rule, to obtain the first total preset result value, and obtain the first total preset result value when the software program runs normally. Then, when running of the software program ends, the second security authentication code corresponding to the last subprocess running in the software program is compared with the first total preset result value. The second security authentication code corresponding to the last subprocess running in the software program is obtained by processing, according to the first preset rule, the initial authentication code and the input security authentication codes corresponding to all the subprocesses. Therefore, when the software program runs correctly, the input security authentication code is equal to the first security authentication code. In this case, the first total preset result value is equal to the second security authentication code corresponding to the last subprocess running in the software program. Whether all the subprocesses in the entire software program run correctly can be determined through only one comparison after running of the software program ends.

Optionally, if an output of the first preset rule prestored by the processor 702 is equal to an input of the first preset rule, the processor 702 is further configured to: when the first subprocess in the software program runs, use the input security authentication code corresponding to the first subprocess as the second security authentication code corresponding to the first subprocess; process all first security authentication codes in the set of first security authentication codes and the initial authentication code according to a second preset rule, to obtain a second total preset result value, where the second preset rule may be exclusive OR, addition, subtraction, multiplication, or division, and the second preset rule is stored in a software variable of the software program or the hardware logic register; after running of the software program ends, process all second security authentication codes and the initial authentication code according to the second preset rule to obtain a total authentication result value; and when the second total preset result value is equal to the total authentication result value, determine that the software program runs correctly.

In this embodiment, the first preset rule is an input-output rule, and the input security authentication code corresponding to the first subprocess is directly used as the second security authentication code corresponding to the first subprocess, to obtain a set of second security authentication codes when running of the software program ends. Then, the set of second security authentication codes is processed according to the second preset rule to obtain the total authentication result value. Before the software program runs, the set of first security authentication codes is processed according to the same second preset rule to obtain the second total preset result value. Therefore, it can be determined that the software program runs normally, provided that the second total preset result value is equal to the total authentication result value.

The hardware logic circuit 703 is independent of the processor 702, and the hardware logic circuit 703 is configured to determine whether a relationship between the set of first security authentication codes and the second security authentication code meets the preset relationship. The hardware logic circuit 703 may be a hardware circuit that can read code to execute a program, a processor core with a register, or a chip such as an SoC or a processor. When the relationship between the set of first security authentication codes and the second security authentication code meets the preset relationship, the hardware logic circuit 703 determines that the software program runs correctly.

In this embodiment, the hardware logic circuit 703 compares the set of first security authentication codes with the second security authentication code, so that work of the hardware logic circuit 703 is not bypassed even if a subprocess in the software program is tampered with or bypassed. Therefore, all preset result values corresponding to the first preset rule and all preset result values corresponding to the second preset rule are stored in a hardware logic register, so that there is a higher confidentiality level for the comparison between the set of first security authentication codes and the second security authentication code. This further improves security.

Optionally, the first preset rule is stored in a software variable of the software program or a hardware logic register. The first preset rule is exclusive OR, addition, subtraction, multiplication, or division.

In this embodiment, the first preset rule is stored in the software variable of the software program, so that the processor 702 running may obtain the first preset rule for calculation. Further, if the first preset rule is stored in the hardware logic register, the first preset rule can have a higher confidentiality level. The hardware logic register cannot be bypassed even if the software program is tampered with. This improves security.

Optionally, the first security authentication code, the second security authentication code, and the initial authentication code include a symbol or a random number.

In this embodiment of this application, because the first security authentication code in the set of first security authentication codes is randomly generated before the software program runs, the first security authentication code may be a randomly generated symbol or a random number, to facilitate calculation according to the first preset rule or the second preset rule.

Optionally, the at least one subprocess is a subprocess that is repeatedly used in the software program, or the at least one subprocess is a subprocess including some deterministic steps in a software program whose running program is nondeterministic.

In this embodiment, the subprocesses monitored by using the method for checking running of the software program are not all subprocesses in the software program, but some subprocesses running in the program. The subprocesses monitored by using the method for checking running of the software program may be some subprocesses that affect software program running security, or may be subprocesses that are repeatedly used in the software program or subprocesses including some deterministic steps in a software program whose running program is nondeterministic. In this way, computing power is reduced, not all subprocesses need to be monitored, and correct running of a correct software program is ensured by monitoring some subprocesses.

Optionally, the software program includes secure boot or protocol authentication. The at least one subprocess includes boot initialization, flash data reading, key and parameter authentication, system initialization, code authentication, and a boot finishing process.

In this embodiment, secure boot or protocol authentication is a typical scenario that has a requirement on running security of the software program. Subprocesses that affect running security of secure boot or protocol authentication include the boot initialization process, the flash data reading process, the key and parameter authentication process, the system initialization process, the code authentication process, and the boot finishing process. In this way, whether entire secure boot or protocol authentication runs correctly can be monitored by determining the foregoing subprocesses.

Based on the descriptions of the foregoing implementations, a person skilled in the art may clearly understand that this application may be implemented by software in addition to necessary universal hardware, or certainly may be implemented by dedicated hardware, including an application-specific integrated circuit, a dedicated CPU, a dedicated memory, a dedicated component, and the like. Usually, all functions completed by a computer program may be easily implemented by using corresponding hardware, and various specific hardware structures are used to implement a same function, for example, an analog circuit, a digital circuit, and a dedicated circuit. However, in this application, implementation based on a software program is usually a better implementation in most cases. Based on such an understanding, the technical solutions of this application essentially or the part contributing to the current technology may be implemented in a form of a software product. The computer software product is stored in a readable storage medium, such as a floppy disk, a USB flash drive, a removable hard disk, a read-only memory (ROM), a random access memory (RAM), a magnetic disk, or an optical disc of a computer, and includes several instructions for instructing a computer device (which may be a personal computer, a server, a communication apparatus, or the like) to perform the methods in the embodiments of this application.

All or some of the foregoing embodiments may be implemented by using software, hardware, firmware, or any combination thereof. When the software is used to implement the embodiments, all or some of the embodiments may be implemented in a form of a computer program product.

The computer program product includes one or more computer instructions. When the computer program instructions are loaded and executed on the computer, all or some of the processes or functions in the embodiments of the present invention are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium is any usable medium that can be stored by a computer, or a data storage device, such as a server or a data center, integrating one or more usable media. The usable medium is a magnetic medium (for example, a floppy disk, a hard disk, or a magnetic tape), an optical medium (for example, a DVD), a semiconductor medium (for example, a solid-state disk (SSD)), or the like.

A person of ordinary skill in the art may understand that all or some of the steps of the methods in the embodiments may be implemented by a program instructing related hardware. The program may be stored in a computer-readable storage medium. The storage medium may include a ROM, a RAM, a magnetic disk, or an optical disc, or the like.

The foregoing describes in detail the method for checking running of the software program, the electronic device, and the storage medium provided in the embodiments of the present invention. In this specification, specific examples are used to describe the principles and implementations of the present invention. The descriptions in the foregoing embodiments are merely used to help understand the method and the core idea of the present invention. In addition, a person of ordinary skill in the art may make modifications with reference to the specific implementations and application scope based on the idea of the present invention. In conclusion, the content of this specification shall not be construed as limitation to the present invention.

## Claims

1. A method for checking running of a software program, wherein the software program comprises at least one subprocess, each of the at least one subprocess corresponds to one secure operation, and the software program runs on a processor (702); and the method comprises:
Generating (Step 101) a set of first security authentication codes, wherein the set of first security authentication codes is a set randomly generated before the software program runs, the set of first security authentication codes comprises at least one first security authentication code, and the at least one first security authentication code one-to-one corresponds to the at least one subprocess in the software program;
Processing (Step 102) an input security authentication code according to a first preset rule each time a subprocess runs, to obtain a second security authentication code, wherein each subprocess that has run in a process of running the software program corresponds to one input security authentication code and one second security authentication code; and when the subprocess runs correctly, the input security authentication code is equal to a first security authentication code corresponding to the subprocess; and
when a relationship between the set of first security authentication codes and the second security authentication code meets a preset relationship, determining (Step 103) that the software program runs correctly,
wherein the verifying an input security authentication code according to a first preset rule each time a subprocess runs, to obtain a second security authentication code comprises:
when a first subprocess in the software program runs, obtaining an input security authentication code corresponding to the first subprocess, input security authentication codes corresponding to all subprocesses that have run before the first subprocess, and an initial authentication code, wherein there is no correspondence between the initial authentication code and a subprocess in the software program; the first subprocess is a subprocess in the software program; and when the first subprocess runs correctly, the input security authentication code corresponding to the first subprocess is a first security authentication code corresponding to the first subprocess; and
processing, according to the first preset rule, the initial authentication code, the input security authentication codes corresponding to all the subprocesses that have run before the first subprocess, and the input authentication code corresponding to the first subprocess, to obtain a second security authentication code corresponding to the first subprocess.

2. The method according to claim 1, wherein when a relationship between the set of first security authentication codes and the second security authentication code meets a preset relationship, the determining that the software program runs correctly comprises:
Processing (Step 202), according to the first preset rule, an initial authentication code, the first security authentication code corresponding to the first subprocess, and first security authentication codes corresponding to all the subprocesses that have run before the first subprocess, to obtain a first preset result value corresponding to the first subprocess; and
when the first subprocess in the software program runs (Step 203) and the first preset result value is equal to the second security authentication code corresponding to the first subprocess, determining that the first subprocess runs correctly.

3. The method according to claim 1, wherein when a relationship between the set of first security authentication codes and the second security authentication code meets a preset relationship, the determining that the software program runs correctly comprises:
Processing (Step 302), according to the first preset rule, the initial authentication code and all first security authentication codes in the set of first security authentication codes, to obtain a first total preset result value; and
when running of the software program ends (Step 304) and the first total preset result value is equal to a second security authentication code corresponding to a last subprocess running in the software program, determining that the software program runs correctly.

4. The method according to any one of claims 1 to 3, wherein the method further comprises:
determining, by using a hardware logic circuit, whether a relationship between the set of first security authentication codes and the second security authentication code meets the preset relationship; and
when a relationship between the set of first security authentication codes and the second security authentication code meets a preset relationship, the determining that the software program runs correctly specifically comprises:
when the relationship between the set of first security authentication codes and the second security authentication code meets the preset relationship, determining, by using the hardware logic circuit, that the software program runs correctly, wherein
the hardware logic circuit is independent of the processor (702).

5. The method according to any one of claims 1 to 4, wherein the first preset rule is stored in a software variable of the software program or a hardware logic register, and the first preset rule is exclusive OR, addition, subtraction, multiplication, or division.

6. The method according to any one of claims 1 to 5, wherein the first security authentication code, the second security authentication code, and the initial authentication code comprise a symbol or a random number.

7. The method according to any one of claims 1 to 6, wherein the software program comprises secure boot or protocol authentication; and the at least one subprocess comprises boot initialization, flash data reading, key and parameter authentication, system initialization, code authentication, and a boot finishing process.

8. An electronic device, wherein the electronic device comprises a transmission interface (701) and a processor (702), and the processor (702) is configured to:
generate a set of first security authentication codes, wherein the set of first security authentication codes is a set randomly generated before the software program runs, the set of first security authentication codes comprises at least one first security authentication code, the at least one first security authentication code one-to-one corresponds to at least one subprocesses in the software program, the software program comprises at least one subprocess, each of the at least one subprocess corresponds to one secure operation, and the software program runs on the processor (702);
process an input security authentication code according to a first preset rule each time a subprocess runs, to obtain a second security authentication code, wherein each subprocess that has run in a process of running the software program corresponds to one input security authentication code and one second security authentication code; and when the subprocess runs correctly, the input security authentication code is equal to a first security authentication code corresponding to the subprocess; and
when a relationship between the set of first security authentication codes generated by the processor (702) and the second security authentication code meets a preset relationship, determine that the software program runs correctly,
wherein the processor is further configured to:
when a first subprocess in the software program runs, obtain an input security authentication code corresponding to the first subprocess, input security authentication codes corresponding to all subprocesses that have run before the first subprocess, and an initial authentication code, wherein there is no correspondence between the initial authentication code and a subprocess in the software program; the first subprocess is a subprocess in the software program; and when the first subprocess runs correctly, the input security authentication code corresponding to the first subprocess is a first security authentication code corresponding to the first subprocess; and
process, according to the first preset rule, the initial authentication code, the input security authentication codes corresponding to all the subprocesses that have run before the first subprocess, and the input authentication code corresponding to the first subprocess, to obtain a second security authentication code corresponding to the first subprocess.

9. The electronic device according to claim 8, wherein the processor (702) is further configured to:
process, according to the first preset rule, an initial authentication code, the first security authentication code corresponding to the first subprocess, and first security authentication codes corresponding to all the subprocesses before the first subprocess, to obtain a first preset result value corresponding to the first subprocess; and
when the first subprocess in the software program runs and the first preset result value is equal to the second security authentication code corresponding to the first subprocess, determine that the first subprocess runs correctly.

10. The electronic device according to claim 8, wherein the processor (702) is further configured to:
process, according to the first preset rule, the initial authentication code and all first security authentication codes in the set of first security authentication codes, to obtain a first total preset result value; and
when running of the software program ends and the first total preset result value is equal to a second security authentication code corresponding to a last subprocess running in the software program, determine that the software program runs correctly.

11. The electronic device according to any one of claims 8 to 10, wherein the electronic device further comprises a hardware logic circuit, the hardware logic circuit is independent of the processor (702), and the hardware logic circuit is configured to:
determine whether a relationship between the set of first security authentication codes and the second security authentication code meets the preset relationship; and
when the relationship between the set of first security authentication codes and the second security authentication code meets the preset relationship, determine that the software program runs correctly.

12. The electronic device according to any one of claims 8 to 10, wherein the electronic device further comprises a hardware logic register, the first preset rule is stored in a software variable of the software program or the hardware logic register, and the first preset rule is exclusive OR, addition, subtraction, multiplication, or division.

13. The electronic device according to any one of claims 8 to 12, wherein the first security authentication code, the second security authentication code, and the initial authentication code comprise a symbol or a random number.

14. The electronic device according to any one of claims 8 to 13, wherein the software program comprises secure boot or protocol authentication; and the at least one subprocess comprises boot initialization, flash data reading, key and parameter authentication, system initialization, code authentication, and a boot finishing process.

15. A computer-readable storage medium, comprising instructions, wherein when the instructions run on a computer device or a processor (702), the computer device or the processor (702) is enabled to perform the method according to any one of claims 1 to 7.

## Patentansprüche

1. Verfahren zum Prüfen eines Laufens eines Softwareprogramms, wobei das Softwareprogramm mindestens einen Teilprozess umfasst, wobei jeder des mindestens einen Teilprozesses einer sicheren Operation entspricht und das Softwareprogramm auf einem Prozessor (702) läuft; und wobei das Verfahren Folgendes umfasst:
Erzeugen (Schritt 101) eines Satzes erster Sicherheitsauthentifizierungscodes, wobei der Satz erster Sicherheitsauthentifizierungscodes ein Satz ist, der zufällig erzeugt wird, bevor das Softwareprogramm läuft, wobei der Satz erster Sicherheitsauthentifizierungscodes mindestens einen ersten Sicherheitsauthentifizierungscode umfasst und der mindestens eine erste Sicherheitsauthentifizierungscode eins zu eins dem mindestens einen Teilprozess in dem Softwareprogramm entspricht;
Verarbeiten (Schritt 102) eines eingegebenen Sicherheitsauthentifizierungscodes gemäß einer ersten voreingestellten Regel jedes Mal, wenn ein Teilprozess läuft, um einen zweiten Sicherheitsauthentifizierungscode zu erlangen, wobei jeder Teilprozess, der während eines Prozesses des Laufens des Softwareprogramms lief, einem eingegebenen Sicherheitsauthentifizierungscode und einem zweiten Sicherheitsauthentifizierungscode entspricht; und, wenn der Teilprozess korrekt läuft, der eingegebene Sicherheitsauthentifizierungscode gleich einem ersten Sicherheitsauthentifizierungscode, der dem Teilprozess entspricht, ist; und
wenn eine Beziehung zwischen dem Satz erster Sicherheitsauthentifizierungscodes und dem zweiten Sicherheitsauthentifizierungscode eine voreingestellte Beziehung erfüllt, Bestimmen (Schritt 103), dass das Softwareprogramm korrekt läuft,
wobei das Verifizieren eines eingegebenen Sicherheitsauthentifizierungscodes gemäß einer ersten voreingestellten Regel jedes Mal, wenn ein Teilprozess läuft, um einen zweiten Sicherheitsauthentifizierungscode zu erlangen, Folgendes umfasst:
wenn ein erster Teilprozess in dem Softwareprogramm läuft, Erlangen eines eingegebenen Sicherheitsauthentifizierungscodes, der dem ersten Teilprozess entspricht, eingegebener Sicherheitsauthentifizierungscodes, die allen Teilprozessen, die vor dem ersten Teilprozess liefen, entsprechen, und eines anfänglichen Authentifizierungscodes, wobei keine Übereinstimmung zwischen dem anfänglichen Authentifizierungscode und einem Teilprozess in dem Softwareprogramm besteht; der erste Teilprozess ein Teilprozess in dem Softwareprogramm ist; und, wenn der erste Teilprozess korrekt läuft, der eingegebene Sicherheitsauthentifizierungscode, der dem ersten Teilprozess entspricht, ein erster Sicherheitsauthentifizierungscode, der dem ersten Teilprozess entspricht, ist; und
Verarbeiten, gemäß der ersten voreingestellten Regel, des anfänglichen Authentifizierungscodes, der eingegebenen Sicherheitsauthentifizierungscodes, die allen Teilprozessen, die vor dem ersten Teilprozess liefen, entsprechen, und des eingegebenen Authentifizierungscodes, der dem ersten Teilprozess entspricht, um einen zweiten Sicherheitsauthentifizierungscode, der dem ersten Teilprozess entspricht, zu erlangen.

2. Verfahren nach Anspruch 1, wobei, wenn eine Beziehung zwischen dem Satz erster Sicherheitsauthentifizierungscodes und dem zweiten Sicherheitsauthentifizierungscode eine voreingestellte Beziehung erfüllt, das Bestimmen, dass das Softwareprogramm korrekt läuft, Folgendes umfasst:
Verarbeiten (Schritt 202), gemäß der ersten voreingestellten Regel, eines anfänglichen Authentifizierungscodes, des ersten Sicherheitsauthentifizierungscodes, der dem ersten Teilprozess entspricht, und erster Sicherheitsauthentifizierungscodes, die allen Teilprozessen, die vor dem ersten Teilprozess liefen, entsprechen, um einen ersten voreingestellten Ergebniswert, der dem ersten Teilprozess entspricht, zu erlangen; und
wenn der erste Teilprozess in dem Softwareprogramm läuft (Schritt 203) und der erste voreingestellte Ergebniswert gleich dem zweiten Sicherheitsauthentifizierungscode ist, der dem ersten Teilprozess entspricht, Bestimmen, dass der erste Teilprozess korrekt läuft.

3. Verfahren nach Anspruch 1, wobei, wenn eine Beziehung zwischen dem Satz erster Sicherheitsauthentifizierungscodes und dem zweiten Sicherheitsauthentifizierungscode eine voreingestellte Beziehung erfüllt, das Bestimmen, dass das Softwareprogramm korrekt läuft, Folgendes umfasst:
Verarbeiten (Schritt 302), gemäß der ersten voreingestellten Regel, des anfänglichen Authentifizierungscodes und aller ersten Sicherheitsauthentifizierungscodes in dem Satz erster Sicherheitsauthentifizierungscodes, um einen ersten voreingestellten Gesamtergebniswert zu erlangen; und
wenn das Laufen des Softwareprogramms endet (Schritt 304) und der erste voreingestellte Gesamtergebniswert gleich einem zweiten Sicherheitsauthentifizierungscode ist, der einem letzten Teilprozess, der in dem Softwareprogramm läuft, entspricht, Bestimmen, dass das Softwareprogramm korrekt läuft.

4. Verfahren nach einem der Ansprüche 1 bis 3, wobei das Verfahren ferner Folgendes umfasst:
Bestimmen, unter Verwendung einer Hardware-Logikschaltung, ob eine Beziehung zwischen dem Satz erster Sicherheitsauthentifizierungscodes und dem zweiten Sicherheitsauthentifizierungscode die voreingestellte Beziehung erfüllt; und
wenn eine Beziehung zwischen dem Satz erster Sicherheitsauthentifizierungscodes und dem zweiten Sicherheitsauthentifizierungscode eine voreingestellte Beziehung erfüllt, das Bestimmen, dass das Softwareprogramm korrekt läuft, insbesondere Folgendes umfasst:
wenn die Beziehung zwischen dem Satz erster Sicherheitsauthentifizierungscodes und dem zweiten Sicherheitsauthentifizierungscode die voreingestellte Beziehung erfüllt, Bestimmen, unter Verwendung der Hardware-Logikschaltung, dass das Softwareprogramm korrekt läuft, wobei die Hardware-Logikschaltung von dem Prozessor (702) unabhängig ist.

5. Verfahren nach einem der Ansprüche 1 bis 4, wobei die erste voreingestellte Regel in einer Softwarevariablen des Softwareprogramms oder einem Hardware-Logikregister gespeichert ist und die erste voreingestellte Regel ein exklusives ODER, eine Addition, eine Subtraktion, eine Multiplikation oder eine Division ist.

6. Verfahren nach einem der Ansprüche 1 bis 5, wobei der erste Sicherheitsauthentifizierungscode, der zweite Sicherheitsauthentifizierungscode und der anfängliche Authentifizierungscode ein Symbol oder eine zufällige Zahl umfassen.

7. Verfahren nach einem der Ansprüche 1 bis 6, wobei das Softwareprogramm sicheres Booten oder Protokollauthentifizierung umfasst; und der mindestens eine Teilprozess Boot-Initialisierung, Flash-Datenauslesung, Schlüssel- und Parameterauthentifizierung, Systeminitialisierung, Codeauthentifizierung und einen Boot-Abschlussprozess umfasst.

8. Elektronische Vorrichtung, wobei die elektronische Vorrichtung eine Übertragungsschnittstelle (701) und einen Prozessor (702) umfasst und der Prozessor (702) zu Folgendem konfiguriert ist:
Erzeugen eines Satzes erster Sicherheitsauthentifizierungscodes, wobei der Satz erster Sicherheitsauthentifizierungscodes ein Satz ist, der zufällig erzeugt wird, bevor das Softwareprogramm läuft, der Satz erster Sicherheitsauthentifizierungscodes mindestens einen ersten Sicherheitsauthentifizierungscode umfasst, der mindestens eine erste Sicherheitsauthentifizierungscode eins zu eins mindestens einem Teilprozess in dem Softwareprogramm entspricht, das Softwareprogramm mindestens einen Teilprozess umfasst, jeder des mindestens einen Teilprozesses einer sicheren Operation entspricht und das Softwareprogramm auf dem Prozessor (702) läuft;
Verarbeiten eines eingegebenen Sicherheitsauthentifizierungscodes gemäß einer ersten voreingestellten Regel jedes Mal, wenn ein Teilprozess läuft, um einen zweiten Sicherheitsauthentifizierungscode zu erlangen, wobei jeder Teilprozess, der während eines Prozesses des Laufens des Softwareprogramms lief, einem eingegebenen Sicherheitsauthentifizierungscode und einem zweiten Sicherheitsauthentifizierungscode entspricht; und, wenn der Teilprozess korrekt läuft, der eingegebene Sicherheitsauthentifizierungscode gleich einem ersten Sicherheitsauthentifizierungscode, der dem Teilprozess entspricht, ist; und
wenn eine Beziehung zwischen dem Satz erster Sicherheitsauthentifizierungscodes, der durch den Prozessor (702) erzeugt wird, und dem zweiten Sicherheitsauthentifizierungscode eine voreingestellte Beziehung erfüllt, Bestimmen, dass das Softwareprogramm korrekt läuft,
wobei der Prozessor ferner zu Folgendem konfiguriert ist:
wenn ein erster Teilprozess in dem Softwareprogramm läuft, Erlangen eines eingegebenen Sicherheitsauthentifizierungscodes, der dem ersten Teilprozess entspricht, eingegebener Sicherheitsauthentifizierungscodes, die allen Teilprozessen, die vor dem ersten Teilprozess liefen, entsprechen, und eines anfänglichen Authentifizierungscodes, wobei keine Übereinstimmung zwischen dem anfänglichen Authentifizierungscode und einem Teilprozess in dem Softwareprogramm besteht; der erste Teilprozess ein Teilprozess in dem Softwareprogramm ist; und, wenn der erste Teilprozess korrekt läuft, der eingegebene Sicherheitsauthentifizierungscode, der dem ersten Teilprozess entspricht, ein erster Sicherheitsauthentifizierungscode, der dem ersten Teilprozess entspricht, ist; und
Verarbeiten, gemäß der ersten voreingestellten Regel, des anfänglichen Authentifizierungscodes, der eingegebenen Sicherheitsauthentifizierungscodes, die allen Teilprozessen, die vor dem ersten Teilprozess liefen, entsprechen, und des eingegebenen Authentifizierungscodes, der dem ersten Teilprozess entspricht, um einen zweiten Sicherheitsauthentifizierungscode, der dem ersten Teilprozess entspricht, zu erlangen.

9. Elektronische Vorrichtung nach Anspruch 8, wobei der Prozessor (702) ferner zu Folgendem konfiguriert ist:
Verarbeiten, gemäß der ersten voreingestellten Regel, eines anfänglichen Authentifizierungscodes, des ersten Sicherheitsauthentifizierungscodes, der dem ersten Teilprozess entspricht, und erster Sicherheitsauthentifizierungscodes, die allen Teilprozessen vor dem ersten Teilprozess entsprechen, um einen ersten voreingestellten Ergebniswert, der dem ersten Teilprozess entspricht, zu erlangen; und
wenn der erste Teilprozess in dem Softwareprogramm läuft und der erste voreingestellte Ergebniswert gleich dem zweiten Sicherheitsauthentifizierungscode ist, der dem ersten Teilprozess entspricht, Bestimmen, dass der erste Teilprozess korrekt läuft.

10. Elektronische Vorrichtung nach Anspruch 8, wobei der Prozessor (702) ferner zu Folgendem konfiguriert ist:
Verarbeiten, gemäß der ersten voreingestellten Regel, des anfänglichen Authentifizierungscodes und aller ersten Sicherheitsauthentifizierungscodes in dem Satz erster Sicherheitsauthentifizierungscodes, um einen ersten voreingestellten Gesamtergebniswert zu erlangen; und
wenn das Laufen des Softwareprogramms endet und der erste voreingestellte Gesamtergebniswert gleich einem zweiten Sicherheitsauthentifizierungscode ist, der einem letzten Teilprozess, der in dem Softwareprogramm läuft, entspricht, Bestimmen, dass das Softwareprogramm korrekt läuft.

11. Elektronische Vorrichtung nach einem der Ansprüche 8 bis 10, wobei die elektronische Vorrichtung ferner eine Hardware-Logikschaltung umfasst, die Hardware-Logikschaltung von dem Prozessor (702) unabhängig ist und die Hardware-Logikschaltung zu Folgendem konfiguriert ist:
Bestimmen, ob eine Beziehung zwischen dem Satz erster Sicherheitsauthentifizierungscodes und dem zweiten Sicherheitsauthentifizierungscode die voreingestellte Beziehung erfüllt; und
wenn die Beziehung zwischen dem Satz erster Sicherheitsauthentifizierungscodes und dem zweiten Sicherheitsauthentifizierungscode die voreingestellte Beziehung erfüllt, Bestimmen, dass das Softwareprogramm korrekt läuft.

12. Elektronische Vorrichtung nach einem der Ansprüche 8 bis 10, wobei die elektronische Vorrichtung ferner ein Hardware-Logikregister umfasst, die erste voreingestellte Regel in einer Softwarevariablen des Softwareprogramms oder dem Hardware-Logikregister gespeichert ist und die erste voreingestellte Regel ein exklusives ODER, eine Addition, eine Subtraktion, eine Multiplikation oder eine Division ist.

13. Elektronische Vorrichtung nach einem der Ansprüche 8 bis 12, wobei der erste Sicherheitsauthentifizierungscode, der zweite Sicherheitsauthentifizierungscode und der anfängliche Authentifizierungscode ein Symbol oder eine zufällige Zahl umfassen.

14. Elektronische Vorrichtung nach einem der Ansprüche 8 bis 13, wobei das Softwareprogramm sicheres Booten oder Protokollauthentifizierung umfasst; und der mindestens eine Teilprozess Boot-Initialisierung, Flash-Datenauslesung, Schlüssel- und Parameterauthentifizierung, Systeminitialisierung, Codeauthentifizierung und einen Boot-Abschlussprozess umfasst.

15. Computerlesbares Speichermedium, umfassend Anweisungen, wobei, wenn die Anweisungen auf einer Rechenvorrichtung oder einem Prozessor (702) laufen, die Rechenvorrichtung oder der Prozessor (702) in die Lage versetzt wird, das Verfahren nach einem der Ansprüche 1 bis 7 durchzuführen.

## Revendications

1. Procédé pour vérifier l'exécution d'un programme logiciel, dans lequel le programme logiciel comprend au moins un sous-processus, chacun des au moins un sous-processus correspond à une opération sécurisée, et le programme logiciel s'exécute sur un processeur (702) ; et le procédé comprend :
la génération (Step 101) d'un ensemble de premiers codes d'authentification de sécurité, dans lequel l'ensemble de premiers codes d'authentification de sécurité est un ensemble généré aléatoirement avant l'exécution du programme logiciel, l'ensemble de premiers codes d'authentification de sécurité comprend au moins un premier code d'authentification de sécurité, et l'au moins un premier code d'authentification de sécurité correspond de manière biunivoque à l'au moins un sous-processus du programme logiciel ;
le traitement (Step 102) d'un code d'authentification de sécurité d'entrée selon une première règle prédéfinie à chaque exécution d'un sous-processus, afin d'obtenir un second code d'authentification de sécurité, dans lequel chaque sous-processus exécuté lors d'un processus d'exécution du programme logiciel correspond à un code d'authentification de sécurité d'entrée et à un second code d'authentification de sécurité ;
et lorsque le sous-processus s'exécute correctement, le code d'authentification de sécurité d'entrée est égal à un premier code d'authentification de sécurité correspondant au sous-processus ; et
lorsqu'une relation entre l'ensemble de premiers codes d'authentification de sécurité et le second code d'authentification de sécurité répond à une relation prédéfinie, la détermination (Step 103) du fait que le programme logiciel s'exécute correctement,
dans lequel la vérification d'un code d'authentification de sécurité d'entrée selon une première règle prédéfinie à chaque exécution d'un sous-processus, afin d'obtenir un second code d'authentification de sécurité, comprend :
lorsqu'un premier sous-processus du programme logiciel s'exécute, l'obtention d'un code d'authentification de sécurité d'entrée correspondant au premier sous-processus, des codes d'authentification de sécurité d'entrée correspondant à tous les sous-processus exécutés avant le premier sous-processus, et d'un code d'authentification initial, dans lequel il n'y a pas de correspondance entre le code d'authentification initial et un sous-processus du programme logiciel ; le premier sous-processus est un sous-processus du programme logiciel ; et lorsque le premier sous-processus s'exécute correctement, le code d'authentification de sécurité d'entrée correspondant au premier sous-processus est un premier code d'authentification de sécurité correspondant au premier sous-processus ; et
le traitement, selon la première règle prédéfinie, du code d'authentification initial, des codes d'authentification de sécurité d'entrée correspondant à tous les sous-processus exécutés avant le premier sous-processus, et du code d'authentification d'entrée correspondant au premier sous-processus, afin d'obtenir un second code d'authentification de sécurité correspondant au premier sous-processus.

2. Procédé selon la revendication 1, dans lequel, lorsqu'une relation entre l'ensemble de premiers codes d'authentification de sécurité et le second code d'authentification de sécurité répond à une relation prédéfinie, la détermination du fait que le programme logiciel s'exécute correctement comprend :
le traitement (Step 202), selon la première règle prédéfinie, d'un code d'authentification initial, du premier code d'authentification de sécurité correspondant au premier sous-processus et des premiers codes d'authentification de sécurité correspondant à tous les sous-processus exécutés avant le premier sous-processus, afin d'obtenir une première valeur de résultat prédéfinie correspondant au premier sous-processus ; et
lorsque le premier sous-processus du programme logiciel s'exécute (Step 203) et que la première valeur de résultat prédéfinie est égale au second code d'authentification de sécurité correspondant au premier sous-processus, la détermination du fait que le premier sous-processus s'exécute correctement.

3. Procédé selon la revendication 1, dans lequel lorsqu'une relation entre l'ensemble de premiers codes d'authentification de sécurité et le second code d'authentification de sécurité répond à une relation prédéfinie, la détermination du fait que le programme logiciel s'exécute correctement comprend :
le traitement (Step 302), selon la première règle prédéfinie, du code d'authentification initial et de tous les premiers codes d'authentification de sécurité de l'ensemble de premiers codes d'authentification de sécurité, afin d'obtenir une première valeur totale de résultat prédéfinie ; et
lorsque l'exécution du programme logiciel se termine (Step 304) et que la première valeur totale de résultat prédéfinie est égale à un second code d'authentification de sécurité correspondant à un dernier sous-processus exécuté dans le programme logiciel, la détermination du fait que le programme logiciel s'exécute correctement.

4. Procédé selon l'une quelconque des revendications 1 à 3, dans lequel le procédé comprend en outre :
la détermination, en utilisant un circuit logique matériel, du fait qu'une relation entre l'ensemble de premiers codes d'authentification de sécurité et le second code d'authentification de sécurité répond ou non à la relation prédéfinie ; et
lorsqu'une relation entre l'ensemble de premiers codes d'authentification de sécurité et le second code d'authentification de sécurité répond à une relation prédéfinie,
la détermination du fait que le programme logiciel s'exécute correctement comprend spécifiquement :
lorsque la relation entre l'ensemble de premiers codes d'authentification de sécurité et le second code d'authentification de sécurité répond à la relation prédéfinie, la détermination, en utilisant le circuit logique matériel, du fait que le programme logiciel s'exécute correctement, dans lequel
le circuit logique matériel est indépendant du processeur (702).

5. Procédé selon l'une quelconque des revendications 1 à 4, dans lequel la première règle prédéfinie est stockée dans une variable logicielle du programme logiciel ou dans un registre logique matériel, et la première règle prédéfinie est un OR exclusif, une addition, une soustraction, une multiplication ou une division.

6. Procédé selon l'une quelconque des revendications 1 à 5, dans lequel le premier code d'authentification de sécurité, le second code d'authentification de sécurité et le code d'authentification initial comprennent un symbole ou un nombre aléatoire.

7. Procédé selon l'une quelconque des revendications 1 à 6, dans lequel le programme logiciel comprend un démarrage sécurisé ou une authentification de protocole ; et l'au moins un sous-processus comprend l'initialisation du démarrage, la lecture des données flash, l'authentification des clés et des paramètres, l'initialisation du système, l'authentification du code et un processus de finition du démarrage.

8. Dispositif électronique dans lequel le dispositif électronique comprend une interface de transmission (701) et un processeur (702), et le processeur (702) est configuré pour :
générer un ensemble de premiers codes d'authentification de sécurité, dans lequel l'ensemble de premiers codes d'authentification de sécurité est un ensemble généré aléatoirement avant l'exécution du programme logiciel, l'ensemble de premiers codes d'authentification de sécurité comprend au moins un premier code d'authentification de sécurité, l'au moins un premier code d'authentification de sécurité correspond de manière biunivoque à au moins un sous-processus du programme logiciel, le programme logiciel comprend au moins un sous-processus, chacun des au moins un sous-processus correspond à une opération sécurisée, et le programme logiciel s'exécute sur le processeur (702) ;
traiter un code d'authentification de sécurité d'entrée selon une première règle prédéfinie à chaque exécution d'un sous-processus, afin d'obtenir un second code d'authentification de sécurité, dans lequel chaque sous-processus exécuté lors d'un processus d'exécution du programme logiciel correspond à un code d'authentification de sécurité d'entrée et à un second code d'authentification de sécurité ; et lorsque le sous-processus s'exécute correctement, le code d'authentification de sécurité d'entrée est égal à un premier code d'authentification de sécurité correspondant au sous-processus ; et
lorsqu'une relation entre l'ensemble de premiers codes d'authentification de sécurité généré par le processeur (702) et le second code d'authentification de sécurité répond à une relation prédéfinie, la détermination du fait que le programme logiciel s'exécute correctement,
dans lequel le processeur est en outre configuré pour :
lorsqu'un premier sous-processus du programme logiciel s'exécute, obtenir un code d'authentification de sécurité d'entrée correspondant au premier sous-processus, les codes d'authentification de sécurité d'entrée correspondant à tous les sous-processus exécutés avant le premier sous-processus, et un code d'authentification initial, dans lequel il n'y a pas de correspondance entre le code d'authentification initial et un sous-processus du programme logiciel ; le premier sous-processus est un sous-processus du programme logiciel ; et lorsque le premier sous-processus s'exécute correctement, le code d'authentification de sécurité d'entrée correspondant au premier sous-processus est un premier code d'authentification de sécurité correspondant au premier sous-processus ; et
traiter, selon la première règle prédéfinie, le code d'authentification initial, les codes d'authentification de sécurité d'entrée correspondant à tous les sous-processus exécutés avant le premier sous-processus, et le code d'authentification d'entrée correspondant au premier sous-processus, afin d'obtenir un second code d'authentification de sécurité correspondant au premier sous-processus.

9. Dispositif électronique selon la revendication 8, dans lequel le processeur (702) est en outre configuré pour :
traiter, selon la première règle prédéfinie, un code d'authentification initial, le premier code d'authentification de sécurité correspondant au premier sous-processus et les premiers codes d'authentification de sécurité correspondant à tous les sous-processus avant le premier sous-processus, afin d'obtenir une première valeur de résultat prédéfinie correspondant au premier sous-processus ; et
lorsque le premier sous-processus du programme logiciel s'exécute et que la première valeur de résultat prédéfinie est égale au second code d'authentification de sécurité correspondant au premier sous-processus, la détermination du fait que le premier sous-processus s'exécute correctement.

10. Dispositif électronique selon la revendication 8, dans lequel le processeur (702) est en outre configuré pour :
traiter, selon la première règle prédéfinie, le code d'authentification initial et tous les premiers codes d'authentification de sécurité de l'ensemble de premiers codes d'authentification de sécurité, afin d'obtenir une première valeur totale de résultat prédéfinie ; et
lorsque l'exécution du programme logiciel se termine et que la première valeur totale de résultat prédéfinie est égale à un second code d'authentification de sécurité correspondant à un dernier sous-processus exécuté dans le programme logiciel, la détermination du fait que le programme logiciel s'exécute correctement.

11. Dispositif électronique selon l'une quelconque des revendications 8 à 10, dans lequel le dispositif électronique comprend en outre un circuit logique matériel, le circuit logique matériel est indépendant du processeur (702), et le circuit logique matériel est configuré pour :
déterminer si une relation entre l'ensemble de premiers codes d'authentification de sécurité et le second code d'authentification de sécurité répond à la relation prédéfinie ; et
lorsque la relation entre l'ensemble de premiers codes d'authentification de sécurité et le second code d'authentification de sécurité répond à la relation prédéfinie, la détermination du fait que le programme logiciel s'exécute correctement.

12. Dispositif électronique selon l'une quelconque des revendications 8 à 10, dans lequel le dispositif électronique comprend en outre un registre logique matériel, la première règle prédéfinie est stockée dans une variable logicielle du programme logiciel ou dans le registre logique matériel, et la première règle prédéfinie est un OR exclusif, une addition, une soustraction, une multiplication ou une division.

13. Dispositif électronique selon l'une quelconque des revendications 8 à 12, dans lequel le premier code d'authentification de sécurité, le second code d'authentification de sécurité et le code d'authentification initial comprennent un symbole ou un nombre aléatoire.

14. Dispositif électronique selon l'une quelconque des revendications 8 à 13, dans lequel le programme logiciel comprend un démarrage sécurisé ou une authentification de protocole ; et l'au moins un sous-processus comprend l'initialisation du démarrage, la lecture des données flash, l'authentification des clés et des paramètres, l'initialisation du système, l'authentification du code et un processus de finition du démarrage.

15. Support de stockage lisible par ordinateur, comprenant des instructions, dans lequel, lorsque les instructions sont exécutées sur un dispositif informatique ou un processeur (702), le dispositif informatique ou le processeur (702) est activé pour réaliser le procédé selon l'une quelconque des revendications 1 à 7.
